# EUROPEAN PATENT SPECIFICATION

(11) **EP 3 020 108 B1**
(45) Date of publication and mention of the grant of the patent: **20.03.2019**
(21) Application number: 14822876.0
(22) Date of filing: 10.07.2014
(51) Int. Cl.: H02H 5/00, H02H 5/08

(54) **APPARATUSES AND METHODS FOR CONTROLLING POWER TO ELECTRONIC DEVICES**
VORRICHTUNGEN UND VERFAHREN ZUR STEUERUNG DER LEISTUNG AN ELEKTRONISCHEN VORRICHTUNGEN
APPAREILS ET PROCÉDÉS POUR COMMANDER UNE ALIMENTATION VERS DES DISPOSITIFS ÉLECTRONIQUES

(30) Priority: 10.07.2013 US 201361844654 P
(43) Date of publication of application: 18.05.2016
(73) Proprietor: Revive Electronics LLC, Carmel, IN 46032 (US)
(72) Inventor: TRUSTY, Joel Christopher, Fishers, IN 46037 (US); ZIELINSKI, Reuben Quincey, Fishers, IN 46037 (US); TRUSTY, Micah Neil, Indianapolis, IN 46620 (US)
(74) Representative: Barker Brettell LLP
(86) International application number: PCT/US2014/046151
(87) International publication number: WO 2015/006562

(56) References cited:
- JP-A- H10 174 301
- JP-A- 2007 135 008
- US-A1- 2005 079 888
- US-A1- 2008 013 241
- US-A1- 2011 104 940
- US-A1- 2011 279 931
- US-A1- 2012 231 841

## Description

### FIELD

Embodiments of the present disclosure generally relate to the detection of a moist environment and/or wet circuitry within an electronic device. In some embodiments, power to the wet electronics is inhibited and/or interrupted to prevent damage of the electronic device when moisture is detected within the device.

### BACKGROUND

Electronic devices are frequently manufactured using ultra-precision parts for tight fit- and-finish dimensions intended to keep moisture from entering the interior of the device. Many electronic devices are also manufactured to render disassembly by owners or users difficult without rendering the device inoperable even prior to drying attempts. With the continued miniaturization of electronics and increasingly powerful computerized software applications, it is commonplace for people today to carry multiple electronic devices, such as portable electronic devices. Cell phones are currently more ubiquitous than telephone land lines, and many people inadvertently subject these devices to unintended contact with water or other fluids on a daily basis throughout the world. Example locations where these electronic devices may be subjected to moisture include, for example, bathrooms, kitchens, swimming pools, lakes, washing machines, or other areas where electronic devices (e.g. small, portable electronic devices) can be submerged in water or subjected to high humidity conditions. These electronic devices frequently have miniaturized solid-state transistorized memory for capturing and storing digitized media in the form of phone contact lists, e-mail addresses, digitized photographs, digitized music and the like. These electronic devices are frequently rendered completely (or at least partially) inoperable after the electronics are subjected to a sufficient amount of moisture. US 2011/279931 which is regarded as closest prior art, describes an electronic device capable of controlling a power supply interrupt according to the state of water leakage. US 2008/013241 describes a humidity detection and power cut-off device for electronic equipment.

### SUMMARY

It was discovered by the inventors that a common reaction for an owner of an electronic device (e.g., a mobile phone or smartphone) that has been rendered at least partially inoperative due to moisture intrusion is to connect the device to a charging source. This reaction is presumably due to the owner having a natural response to connect the electronic device to a charger when the device is inoperative. Although the precise reason
for this reaction is speculative, it may be caused by owner's knowledge that the electronic device is battery or electrically powered, and a likely cause of any inoperative battery powered electronic device is a low battery state. Indeed, an owner may have previously "fixed" an inoperative electronic device by simply connecting the device to a charger.

Regardless of the underlying rationale, this common reaction will typically damage the electronics within the electronic device if the device is rendered inoperative due to moisture intrusion. Once the device is subjected to power from a charging circuit, and because the electronic device is wet and therefore highly susceptible to the flow of electrons along unintended pathways, it is common for the device to thereby be permanently damaged. Without protection (e.g., some form of "trip" circuitry) to prevent the electrons from flowing along unintended pathways, the internal electronics are "shorted." Depending on where the moisture resides in the electronic device, the shorting can cause damage to various parts of the device, which can take the form of broad damage or local damage (such as local damage to the digitized screen or the battery charging circuit itself). Unless the user realizes that the device is inoperative due to moisture intrusion, permanent damage to the device will typically occur without the user's knowledge. Moreover, since charging devices currently available on the market do not incorporate a moisture detector or other means of detecting the extent of the wetness within the device, the consumer is left to guess whether he or she should try charging the electronic device to render it operable again.

Even a small amount of water (or moisture) intrusion into an electronic device can be sufficient to adversely affect the operation of the device, and potentially render the device inoperative. For example, a small drop of liquid water less than 1 mm in diameter dispersed within an electronic device (such as a smartphone) can raise the relative humidity levels inside the electronic device 3% - 4% and render the device inoperative.

It was realized by the inventors that new methods and apparatuses (one example being a type of smart charging system) could reduce or prevent damage to electronic devices suffering from moisture intrusion, and particularly in situations where there is no exterior indication to the user that the inside of the electronic device is indeed wet.

Embodiments of the present disclosure relate to apparatuses and methods to prevent connection of electrical power to components of an electronic device in situations where moisture levels within the device are sufficiently high to damage (or potentially damage) the device when the device is connected to an electrical power source. Certain embodiments relate to humidity detection during an attempted charging event, in-line vacuum-scavenging, or both. In some embodiments, the charger does not apply power to a connected device until certain conditions are met. If a wet or high moisture condition is detected after connecting a charger to an electronic device, power may be withheld from the electronic device to protect the wet electronic device from damage.

In certain embodiments, gas (e.g., air) is extracted from within the electronic device, such as via a micro-miniature vacuum-scavenging pump. A moisture detector then detects the level of moisture within the extracted air. An optional chamber encompasses both the pump outlet and the moisture detector to facilitate delivery of extracted air to the sensor. The moisture level (e.g., humidity) of the extracted air is indicative of the moisture within the electronic device. In at least one embodiment, ambient air is sampled and the moisture content (e.g., the relative humidity) of the extracted air is compared to the moisture content (e.g., relative humidity) of the ambient air. If the moisture content of the extracted air is sufficiently low electrical power is supplied to the device.

Certain features of the present disclosure address these and other needs and provide other important advantages.

According to a first aspect, the present invention provides a method according to claim 1. Said method comprises the acts of: sampling air from within an electronic device, measuring an amount of moisture in the sampled device air, and maintaining a disconnection between a source of electrical power and the electronic device when the amount of moisture within the sampled device air exceeds a first predetermined threshold. In embodiments, the method according to the first aspect of the present invention includes maintaining a connection between the source of electrical power and the electronic device when the amount of moisture within the sampled device air does not exceed a second predetermined threshold. In embodiments, the method according to the first aspect of the present invention includes connecting a power interrupter to the source of electrical power and to the electronic device, and optionally, determining when said connecting occurs, wherein said maintaining the connection occurs after said determining. In some embodiments, said sampling includes moving the air from within the electronic device to a moisture detector; and said measuring includes measuring the amount of moisture in the sampled device air with the moisture detector.

According to a second aspect, the present invention provides an apparatus according to claim 6. Said apparatus comprises a moisture detector, the moisture detector being configured to obtain gas from an electronic device and detect a moisture level within a gas sample; the apparatus further comprising a switch connected to the moisture detector, the switch configured to connect to a source of electrical power and to a power input circuitry of the electronic device, the switch including a disconnected state. The switch is configured to electrically isolate the source of electrical power to which the switch is connected from the power input circuitry of the electronic device to which the switch is connected when the moisture detector detects the moisture level within the electronic device to which the switch is connected is at or above a first predetermined threshold. In embodiments of the apparatus according to the second aspect of the present invention, the switch includes a connected state, wherein the switch is configured to electrically connect the source of electrical power to which the switch is connected from the power input circuitry of the electronic device to which the switch is connected when the moisture detector detects the moisture level within the electronic device to which the switch is connected is below a second predetermined threshold, optionally wherein (i) the moisture detector detects water vapor, and wherein the first and the second predetermined thresholds are water vapor thresholds; or (ii) the moisture detector detects humidity, and wherein the first and the second predetermined thresholds are humidity thresholds. In embodiments, the apparatus according to the second aspect of the present invention further comprises a pump configured to move the gas from the electronic device to the moisture detector. In embodiments, the switch connects a power connector to an electronic device connector when a sensed water vapor level from within the electronic device is below a second threshold. In embodiments, the apparatus comprises: a pneumatic connector configured to connect to a port of the electronic device; and a pump configured to move gas from the pneumatic connector to the moisture detector, wherein said moisture detector is a water vapor sensor, wherein, when the electronic device connector and the pneumatic connector are connected to the electronic device and the power connector is connected to the source of electrical power, the pump moves the gas from the electronic device to which the pneumatic connector is connected to the water vapor sensor. In embodiments, the pneumatic connector and the electronic device connector are configured to connect to the same port of the electronic device. In embodiments, the pneumatic connector and the electronic device connector are configured to connect to different ports of the electronic device.

This summary is provided to introduce a selection of the concepts that are described in further detail in the detailed description and drawings contained herein. Some or all of the described features may be present in the corresponding independent or dependent claims, but should not be construed to be a limitation unless expressly recited in a particular claim. Each embodiment described herein is not necessarily intended to address every object described herein, and each embodiment does not necessarily include each feature described. Other forms, embodiments, objects, advantages, benefits, features, and aspects of the present disclosure will become apparent to one of skill in the art from the detailed description and drawings contained herein. Moreover, the various apparatuses and methods described in this summary section, as well as elsewhere in this application, can be expressed as a large number of different combinations and subcombinations. All such useful, novel, and inventive combinations and subcombinations are contemplated herein, it being recognized that the explicit expression of each of these combinations is unnecessary, albeit the scope of protection is defined by the claims.

### BRIEF DESCRIPTION OF THE DRAWINGS

Some of the figures shown herein may include dimensions or may have been created from scaled drawings. However, such dimensions, or the relative scaling within a figure, are by way of example only, and not to be construed as limiting the scope of this disclosure.
FIG. 1 is a top view of a power interrupter according to one embodiment of the present disclosure.
FIG. 2 is a partial enlarged view of the power interrupter depicted in FIG. 1.
FIG. 3 is an isometric view of an impeller with one side plate removed and usable with the power interrupter depicted in FIG. 1 according to one embodiment of the present disclosure.
FIG. 4 is an isometric view of the impeller depicted in FIG. 3 with the removed side plate in position, rotating counterclockwise (as depicted from the reader's perspective), with airflow vectors depicting the general flow of air through and around the impeller.
FIG. 5 is an isometric view of the power interrupter depicted in FIG. 1 with the impeller rotating as depicted in FIG. 4 and airflow vectors depicting the general flow of air through and around the power interrupter.
FIG. 6 is an isometric view of the power interrupter depicted in FIG. 1 connected to an electronic device according to one embodiment of the present disclosure.
FIG. 7 is a schematic circuit diagram usable with the power interrupter depicted in FIG. 1 according to one embodiment of the present disclosure.
FIG. 8 is an isometric view of the impeller depicted in FIG. 4 with the removed side plate in position, rotating clockwise (as depicted from the reader's perspective), with airflow vectors depicting the general flow of air through and around the impeller.
FIG. 9 is an isometric view of the power interrupter depicted in FIG. 1 with the impeller rotating as depicted in FIG. 8 and airflow vectors depicting the general flow of air through and around the power interrupter.
FIG. 10 is a schematic circuit diagram usable with the power interrupter depicted in FIG. 1 according to another embodiment of the present invention.
FIG. 11 is a schematic circuit diagram of a power interrupter mounted within an electronic device according to another embodiment of the present disclosure.
FIG. 12 is a schematic circuit diagram of a power interrupter mounted within an electronic device according to still a further embodiment of the present disclosure.
FIG. 13 is a schematic circuit diagram of the power interrupter depicted in FIG. 12 in a different mode of operation.

### DESCRIPTION OF THE ILLUSTRATED EMBODIMENTS

For the purposes of promoting an understanding of the principles of the invention, reference will now be made to selected embodiments illustrated in the drawings and specific language will be used to describe the same. It will nevertheless be understood that no limitation of the scope of the invention is thereby intended; any alterations and further modifications of the described or illustrated embodiments, and any further applications of the principles of the disclosure as illustrated herein are contemplated as would normally occur to one skilled in the art to which the invention relates. At least one embodiment is shown in great detail, although it will be apparent to those skilled in the relevant art that some features or some combinations of features may not be shown for the sake of clarity.

Any reference to "invention" within this document is a reference to an embodiment of a family of inventions, with no single embodiment including features that are necessarily included in all embodiments, unless otherwise stated. Furthermore, although there may be references to "advantages" provided by some embodiments, other embodiments may not include those same advantages, or may include different advantages. Any advantages described herein are not to be construed as limiting to any of the claims.

Specific quantities (spatial dimensions, temperatures, pressures, times, force, resistance, current, voltage, concentrations, wavelengths, frequencies, heat transfer coefficients, dimensionless parameters, etc.) may be used explicitly or implicitly herein, such specific quantities are presented as examples only and are approximate values unless otherwise indicated. Discussions pertaining to specific compositions of matter, if present, are presented as examples only and do not limit the applicability of other compositions of matter, especially other compositions of matter with similar properties, unless otherwise indicated.

Elements depicted in one figure with reference numerals similar to or the same as those depicted in other figure(s) function similarly to or the same as the elements in the other figure(s) except as shown and/or described.

Embodiments of the present disclosure include devices and equipment generally used for charging or providing electrical power to electronic devices. Embodiments include methods and apparatuses for interrupting and/or preventing the connection of an electronic device (e.g., portable electronic devices such as cell phones, digital music players, pagers, tablet computers and the like) to a power source when the electronic device has been subjected to water, high humidity conditions, or other unintended deleterious wetting agents that can render the device inoperable. At least one embodiment provides a vacuum scavenger pneumatically coupled to a moisture detector to detect the moisture level within the device. The moisture detector can provide a signal to a controller, which is capable of interrupting power to the electronic device. The signal from the moisture detector can be variable and contain profiles that indicate the degree (or extent) of wetness of (or within) the electronic device. This signal can be used to actuate a relay and provide a user a visual indication that the charging circuit has been "tripped" (interrupted) or, alternatively, is operational and charging or providing electrical power to the electronic device. Thus, an electronic device that may otherwise be damaged when it is connected to an electrical charging or power source is protected from electrical damage by this invention.

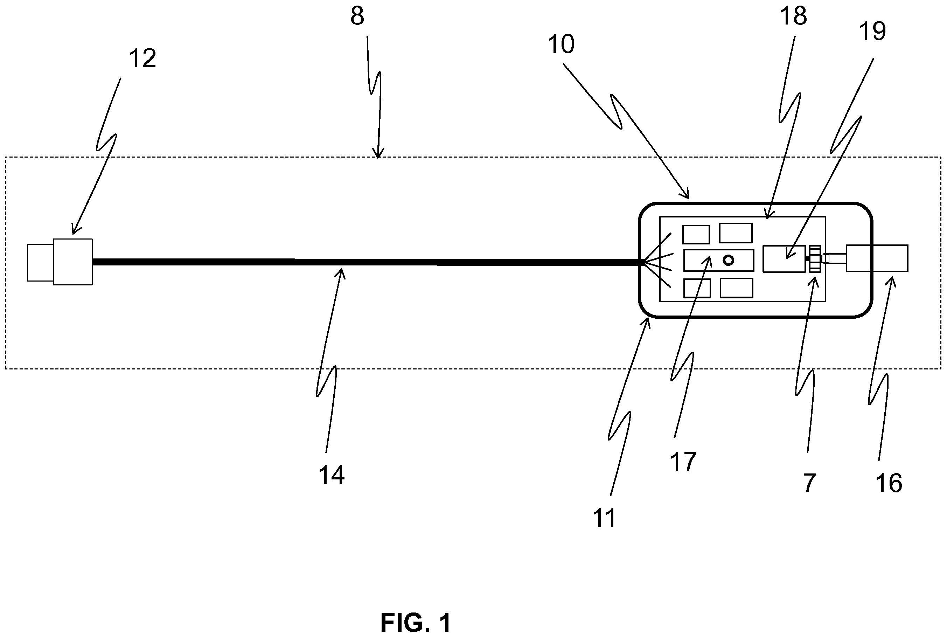

A top view of a power interrupter 8 (e.g., an apparatus for interrupting power while charging or providing electrical power to wet electronic devices) according to one embodiment of the present disclosure is shown in FIG. 1. Power interrupter 8 includes a housing 11, a power connector 12 (e.g., an electrical wall plug or a standard USB-A connector), an electrical cable 14, and electronics control unit 10 (which may be over-molded). Electronics control unit 10 preferably includes electronics (e.g., a printed circuit board 19), a moisture detector (e.g., moisture sensor 17), an electronic device connector 16 (e.g., a USB Mini-B connector), a pneumatic connector adapted to connect to a port of the electronic device (e.g., a headphone jack, a power receptacle, a multi-pin connector, a docking connector, etc.) and withdraw gas (e.g., air) from the electronic device, a pump 7 (which in at least one embodiment is a micro vacuum impeller mechanism), and a means for directing air from the pneumatic connector electronic device connector 16 to the moisture sensor 17, such as an optional passageway, plenum, tube, enclosure (e.g., scavenged air enclosure 18), etc. In some embodiments, the housing itself is sufficient to direct air from the pneumatic port to the moisture sensor 17 and there is no need for a passageway or a scavenged air enclosure.

In the illustrated embodiment of FIG. 1, the pneumatic connector and the electronic device connector 16 are the same structure and the following discussion assumes such a configuration. However, alternate embodiments include a pneumatic connector and an electronic device connector 16 that are defined by different structures and may connect to different ports of the electronic device.

Cable 14 may be fabricated from any materials useful for delivering electrical energy for charging or providing electrical power to electronic devices. Scavenged air enclosure 18 may be fabricated from any material capable of directing air to moisture sensor 17. In some embodiments, air enclosure 18 can be formed using various manufacturing processes, and can withstand various processes such as over-molding without adversely affecting its functionality. In at least one embodiment, air enclosure 18 is formed of an injected molded material, such as plastic. Although power interrupter 8 is depicted as using a USB Mini-B connector for connecting to the electronic device that has potentially been exposed to moisture, other embodiments include other connectors that may be of a standard or specialized configuration.

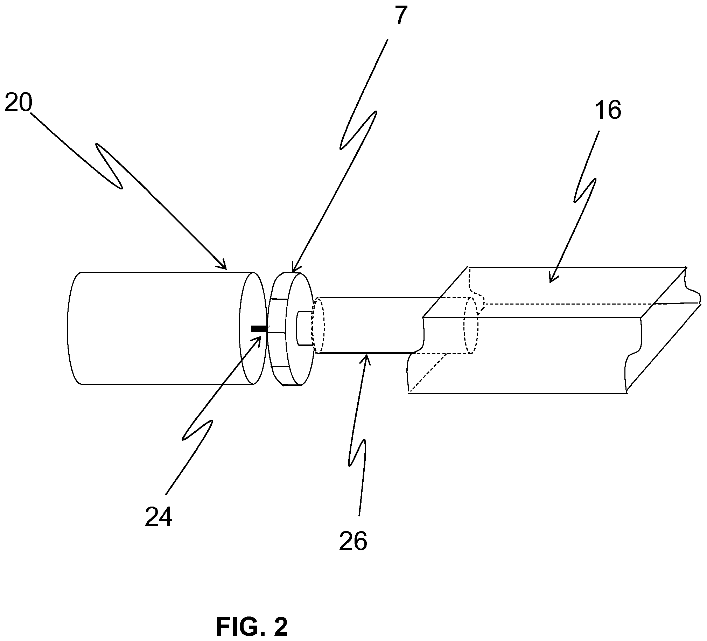

FIG. 2 depicts an enlarged view of a vacuum scavenger according to at least one embodiment of the present disclosure. This embodiment includes a motor 20 (e.g., a micro motor), pump 7 and a connector (e.g., tube 26) pneumatically connecting pump 7 and electronic device connector 16. Pump 7 may be connected to motor 20 in a variety of manners, one example being a micro motor armature shaft 24. When driven by motor 20, pump 7 draws gas (e.g., air) from connector 16 and through tube 26. When connected to an electronic device, such as being connected to an existing port of the electronic device, gas (e.g., air) will be drawn from the port of the electronic device, through connector 16 and through tube 26.

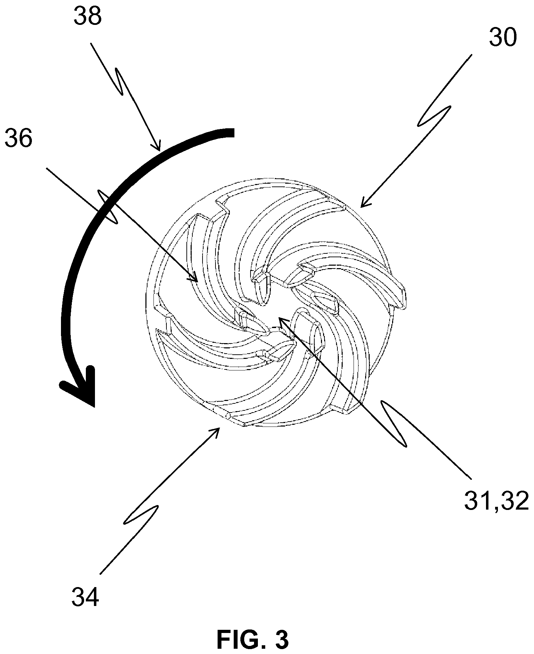

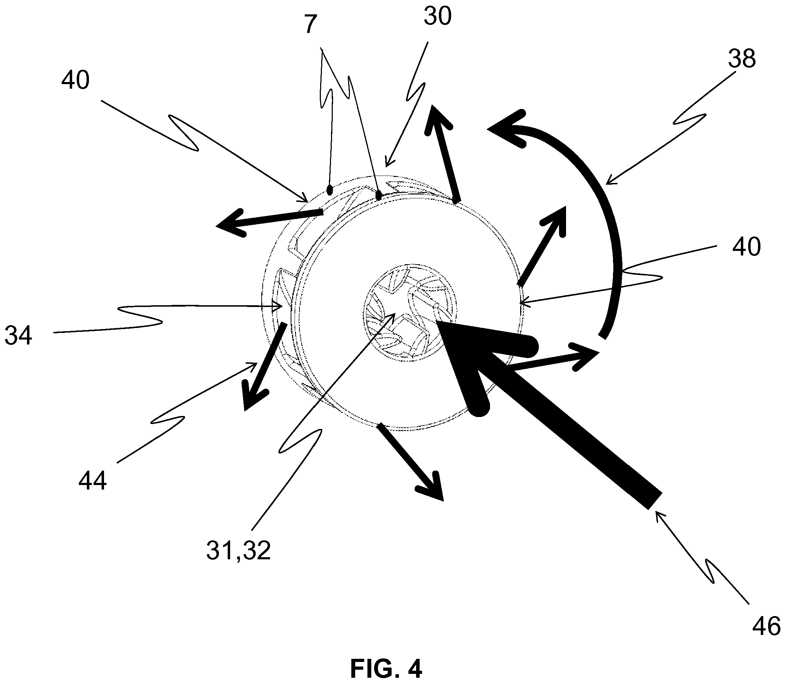

FIGS. 3 and 4 depict a pump 7 according to at least one embodiment of the present disclosure. In the depicted embodiment, pump 7 includes an impeller (e.g., micro impeller 30). aperture 32 and exhaust 34. Exhaust 34 is defined by an open region disposed around the circumference of pump 7, and may include ducts that direct the gas in a particular direction.

Impeller 30 also includes one or more vanes 36, which are depicted as being curved in FIG. 3, but may take on different shapes such as straight or segmented. Vanes 36 are frequently positioned between two surfaces 40. In at least on embodiment, one surface includes an aperture 32 at (or near) the center of vanes 36, which forms an intake 31 when impeller is rotated in the appropriate direction, such as depicted in FIG. 4. At least one side surface 40 may be integral with vanes 36, and at least one side surface 40 may be a separately constructed member that is connected to vanes 36.

When actuated by motor 20 to rotate in direction 38, gas (e.g., air) flows into the pump 7 generally in direction 46 and radially out of pump 7. The exiting gas travels generally along direction vectors 44. Impeller 30 forces gas (e.g., air) out through exhaust 34 and imparts a radial component of velocity to the gas. The forcible exiting of the gas through exhaust 34 creates a low-pressure region at aperture 32, which draws gas (e.g., air) from within the electronic device and delivers the gas from the electronic device to the moisture sensor 17.

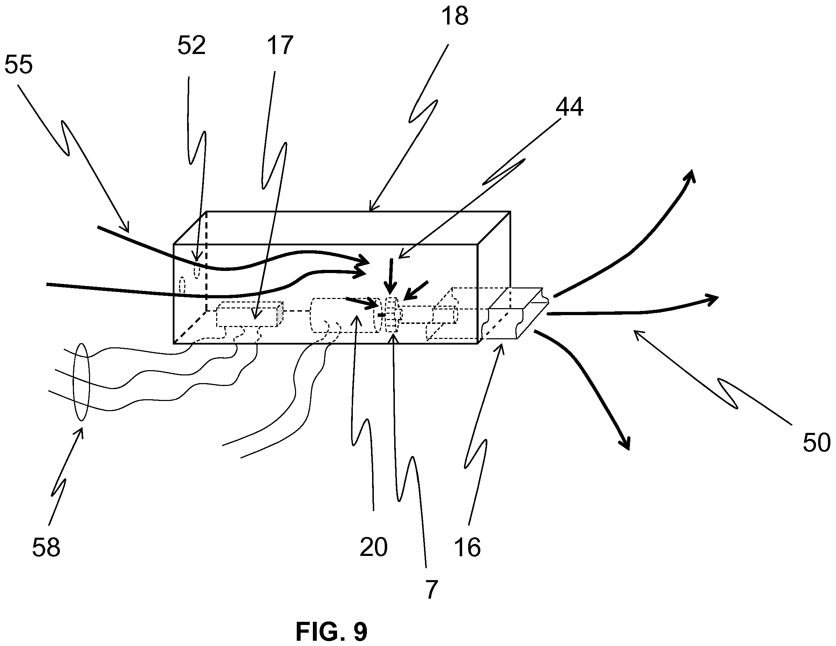

In alternate embodiments, a shroud/cover (not depicted) is positioned around impeller 30 to capture and direct air exiting impeller 30 (see, e.g., FIG. 4) or entering impeller 30 (see, e.g., FIG. 9) into a channel (e.g., a tube) to direct the air along a specific pathway and direction.

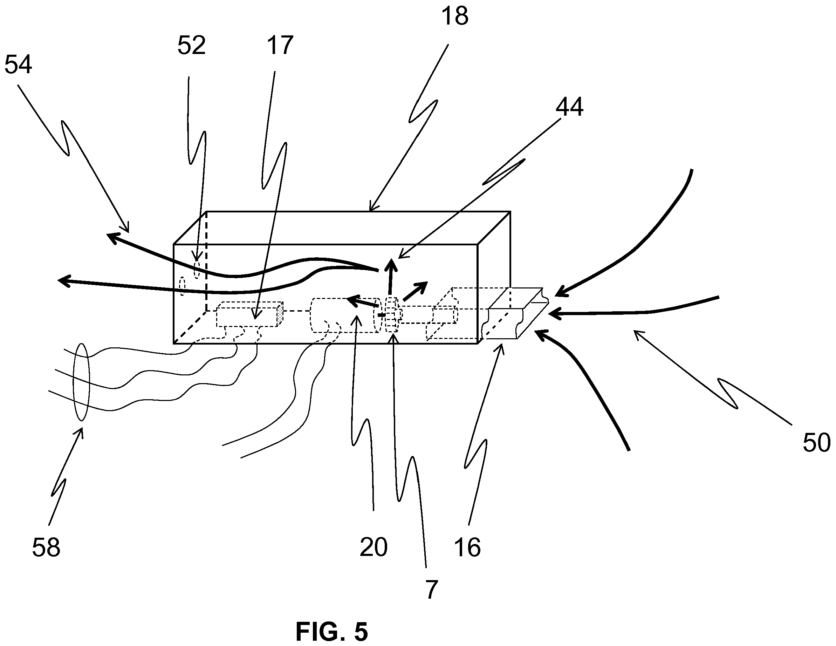

Turning to FIGS. 1 and 5, an optional scavenged air enclosure (e.g., scavenged air enclosure 18) may be included to direct gas from pump 7 to moisture sensor 17. Alternate embodiments may utilize different means or mechanisms for directing gas from pump 7 to moisture sensor 17, such as housing 11 can be used to directing gas from pump 7 to moisture sensor 17. In other embodiments, combinations of one or more channels, tubes,
vanes and/or similar gas directing structures can be used to direct the gas (in whole or in part) from electronic device connector 16 and to the moisture sensor 17.

An expanded view of one embodiment of scavenged air enclosure is depicted in FIG. 5. Scavenged air enclosure 18 houses electronic device connector 16, pump 7, motor 20, and moisture sensor 17. Pump 7 produces a low-pressure region in electronic device connector 16, which causes air to flow into connector 16. When connector 16 is connected to an electronic device, gas from inside the electronic device (e.g., scavenged air 50) will flow to moisture sensor 17 via connector 16. Air exhaust 54 from pump 7, which is typically at a higher pressure than the ambient air, exits enclosure 18 through pressure exhaust ports 52. In addition to moisture sensor 17 and pump 7, scavenged air enclosure 18 may also house other circuitry, which may be used to control various aspects of power interrupter 8.

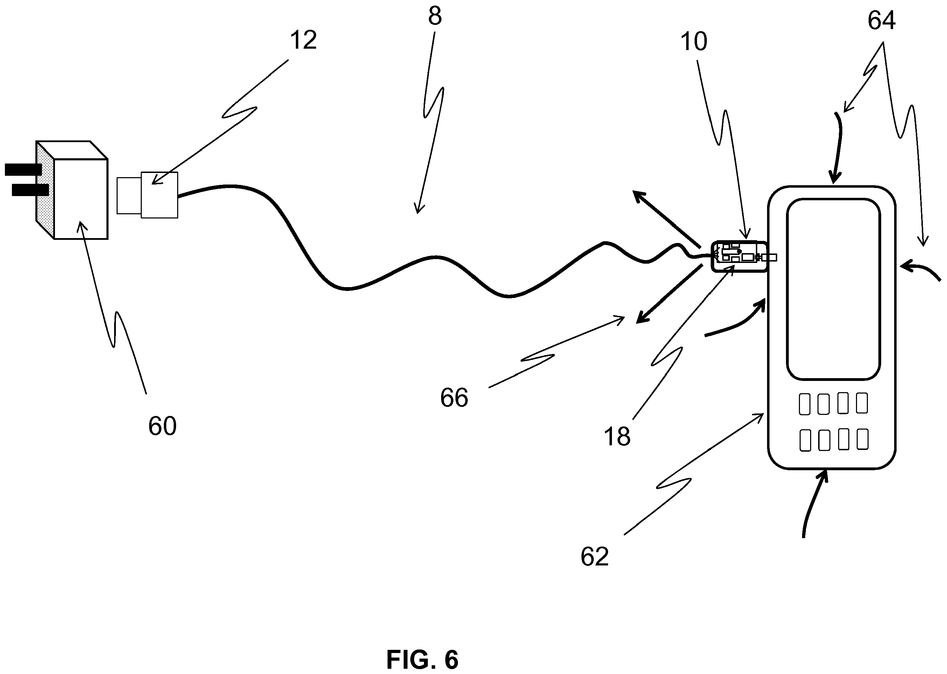

The circuitry in power interrupter 8 is powered by a power source. In the embodiment depicted in FIG. 6, power connector 12 can be connected to an external power supply, such as a conventional electrical wall outlet or a USB power port, to supply power to power interrupter 8. In the depicted embodiment, power connector 12 is formed as a USB power connector, which is configured and adapted to connect to an AC-DC charging transformer 60 with electrical connectors adapted to fit a power receptacle, such as a conventional wall outlet. Power connector 12 may connect to various types of power sources, such as a power outlet in a vehicle or a computer. Some embodiments include an internal power source integral with power interrupter 8, such as a battery (which may be rechargeable or single-use) within housing 11. The battery may be used to operate much of the functionality of the device without the need to rely on external power.

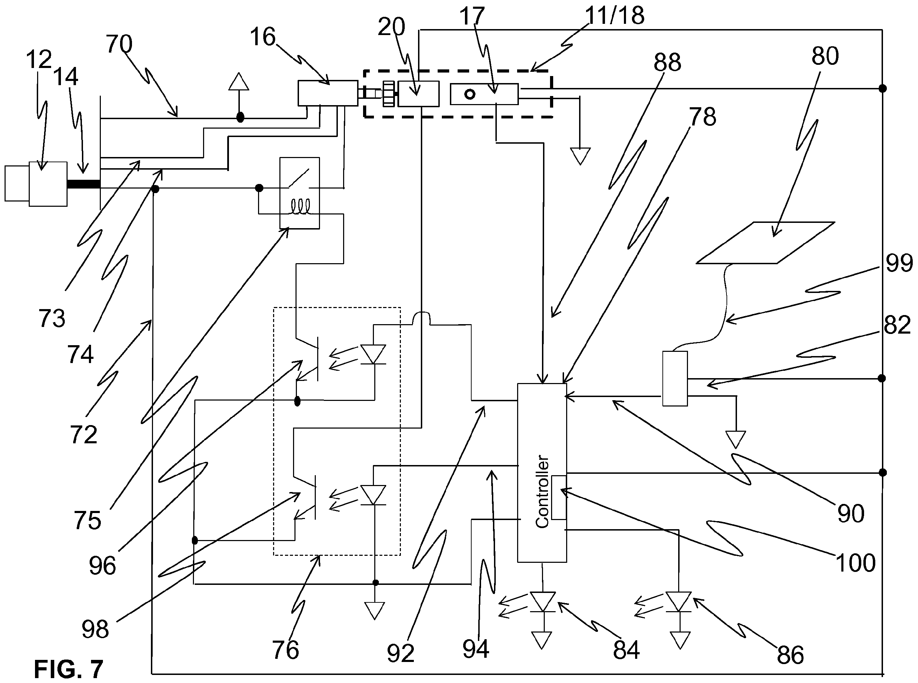

A schematic diagram of an example power interrupter and/or method that may be used with one or more embodiments described herein is depicted in FIG. 7. Power connector 12 is typically grounded, such as by being electrically connected with electronic device connector 16 using a ground wire 70. Power connector 12 may also be electrically connected to connector 16 by a transmit signal wire 73 and receive signal wire 74, one or both of which may be directly wired to electronic device connector 16 via electrical cable 14. A switch, e.g., relay 75, selectively controls power to the electronic device connector 16. A power bus (e.g., a 5-volt power bus 72) is connected to electronic device connector 16 through the switch (e.g., relay 75), which is normally open and energized by circuitry (e.g., circuitry 76). In the example embodiment, circuitry 76 includes an opto-isolator circuit and transistors 96 and 98, which is an efficient configuration to accomplish the switching described below. In at least one embodiment, transistors 96 and 98 are Darlington transistors. Nevertheless, other embodiments utilize other circuitry configurations to accomplish the desired switching.

In the depicted example embodiment (see FIG. 7), transistor 96 is controlled by relay signal 92 driven from controller 78. Controller 78 can contain algorithms (e.g., permanent algorithms) that reside in a memory (e.g., ROM memory 100).

Motor 20 is electrically connected to the power bus (e.g., 5-volt power bus 72) and switched on and off via circuitry 76, such as with transistor 98, which is controlled by motor signal 94 driven from controller 78.

Optionally, a tripped status indicator (e.g., a red LED 84), functional status indicator (e.g., a green LED 86), or both may be connected to controller 78 to provide the user with the status of the charging circuit.

An optional capacitive sensing plate 80 may be connected to capacitive signal sensor 82 by capacitive signal line 99. Capacitive signal sensor 82 may be connected to controller 78 by sensor signal line 90. In some embodiments, capacitive sensing plate 80 is mounted under and inside electronics control unit 10.

Moisture sensor 17, which in some embodiments is housed within scavenged air enclosure 18, may be electrically connected to controller 78 through signal wire 88.

In use, connector 16 of power interrupter 8 is connected to an electronic device (such as mobile telephone 62) and a power source (such as with connector 12). See, e.g., FIG. 6. Electrical power (e.g., DC power from AC-DC transformer block 60 transmitted through cable 14) is supplied to power circuit board 19, electronics control unit 10 and pump 7. In embodiments including a scavenged air enclosure 18, the circuit board 19 may be housed within the scavenged air enclosure 18. During the power-up period, controller 78 boots-up and begins to execute algorithms and routines stored in memory, such as an on-board ROM. (Although a microcontroller is depicted as the main control system, it is generally understood that one skilled in the art could utilize standard logic circuitry to perform the same control function.)

To initiate an air sampling cycle operation, controller 78 activates motor 20 through signal 94 that in turn activates transistor 98. Activation of transistor 98 provides the connection to ground bus 70 and causes pump 7, which is connected to 5-volt power bus 72, to begin to spin. Motor 20 rotates impeller 30 of pump 7 in direction 38, which produces a low-pressure region (vacuum) at aperture 32 (intake port 31) and connector 16, and draws air into pump 7. Gas (e.g., air) within the electronic device (e.g., phone 62) is drawn through connector 16 (which is pneumatically coupled to phone 62), through tube 26 (which is pneumatically connected to connector 16), and into aperture 32 (which is pneumatically connected to tube 26) along direction 46. As such, gas from inside phone 62 is scavenged by pump 7. Moisture sensor 17 is then exposed to air scavenged from the electronic device (e.g., telephone 62), which may be facilitated by structures within power interrupter 8 such as air enclosure 18. The electronic device (e.g., telephone 62) will typically allow ambient air to flow into the electronic device's casing through various ports or seal gaps. (See, e.g., air vectors 64 of FIG. 6 depicting the generalized flow of air around the telephone 62.)

Moisture sensor 17 detects the level of moisture in the gas sampled from the electronic device. For example, moisture sensor 17 may be various types of electronic moisture detectors, such as polymeric, elastic, resistive or capacitive type sensors. In the embodiment depicted in FIG. 7, moisture sensor 17 is powered and sampled by electrical wiring bus 58, which includes signal wire 88 connected to controller 78. Controller 78 samples moisture sensor 17 and monitors the moisture content (e.g., relative humidity). In at least one embodiment, controller 78 monitors the moisture content for approximately 10-15 seconds. In alternate embodiments, controller 78 monitors the moisture content for less than approximately 10 seconds, while in still other embodiments controller 78 monitors the moisture content for greater than approximately 10 seconds.

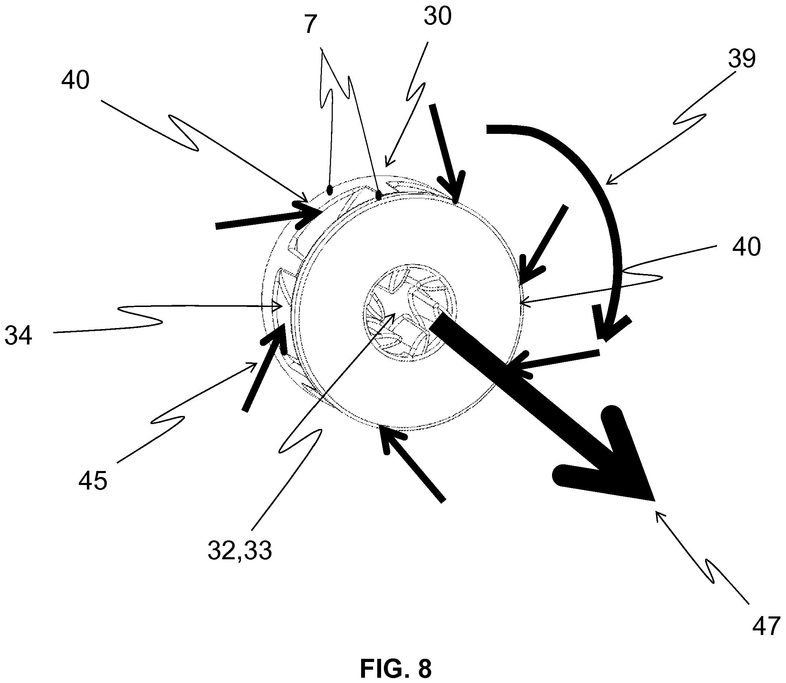

In at least one embodiment, pump 7 and moisture sensor 17 sample the moisture content of the ambient air and microcontroller 78 uses such information to determine whether the electronic device is sufficiently dry to apply electrical power to a device. In at least one embodiment, aperture 32 may be selectively connected to connector 16 and an alternate entry port capable of sampling outside air while connector 16 is connected to an electronic device. In other embodiments, the direction pump 7 moves air is reversed making exhaust ports 52 function as ambient air intake ports. See, e.g., the one or move embodiments related to FIGS. 8 and 9.

In some embodiments, moisture sensor 17 samples the moisture content of the ambient air, such as by sampling through an alternate entry port or by being activated before connector 16 is connected to the electronic device. In the later example, pump 7 may be activated immediately upon connection of connector 12 to a power source and sample the ambient air before connector 16 is connected to the electronic device. (In this embodiment the user may be directed to ensure that power interrupter 8 is powered before being connected to the electronic device). The moisture value of the ambient air can then be stored for later use.

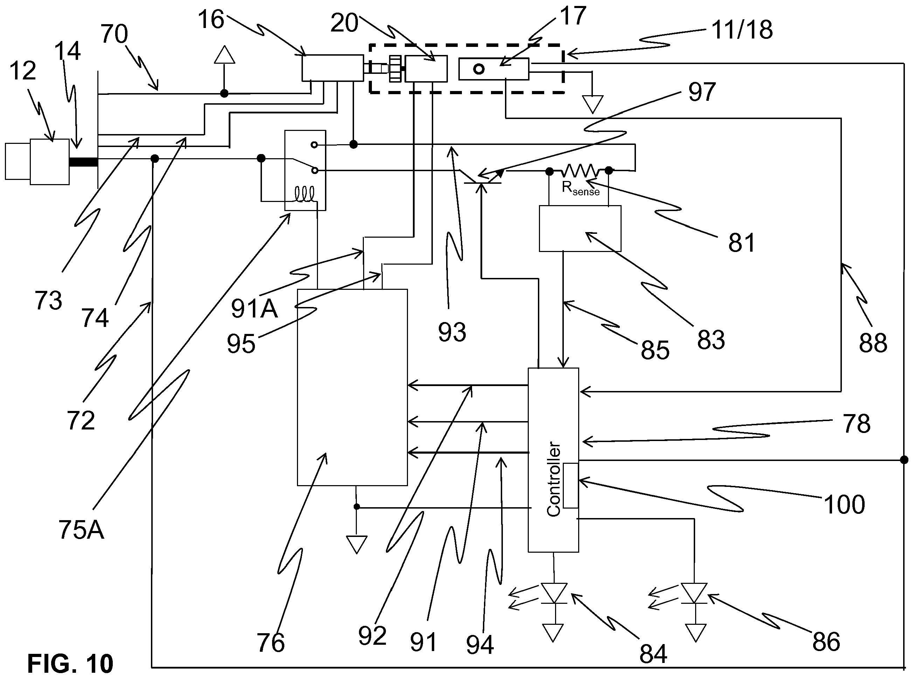

In still a further embodiment, power interrupter 8 is capable of detecting when connector 16 is not connected to an electronic device (see, e.g., discussion of the one or more embodiments related to FIG. 10), and samples the ambient air when connector 16 is not connected to an electronic device. If power interrupter 8 has not sampled the ambient air prior to being connected to an electronic device, power interrupter 8 can give an indication to the user to disconnect connector 16 from the electronic device so that a sample of the ambient air can be made.

In embodiments where ambient air is sampled for moisture content, controller 78 can compare the moisture value of the ambient air to the moisture value of the air within the electronic device. The mathematical difference between the ambient moisture and the moisture within the electronic device can then be calculated by controller 78, and controller 78 can determine whether the electronic device (e.g., phone 62) is sufficiently dry to connect power (such as when the mathematical difference is approximately zero) or is too moisture laden to connect power (such as with the mathematical difference is greater than approximately zero).

In some embodiments, controller 78 is programmed to determine that the electronic device is sufficiently dry for connection of electrical power to the electronic device when the relative humidity of the sampled air (as measured in percent saturation) and the relative humidity of the ambient air (as measured in percent saturation) differ by no more than one (1). In further embodiments, controller 78 is programmed to determine that the electronic device is sufficiently dry for connection of electrical power to the electronic device when the relative humidity of the sampled air (as measured in percent saturation) and the relative humidity of the ambient air (as measured in percent saturation) differ by no more than one-half (1/2). In still further embodiments, controller 78 is programmed to determine that the electronic device is sufficiently dry for connection of electrical power to the electronic device when the relative humidity of the sampled air (as measured in percent saturation) and the relative humidity of the ambient air (as measured in percent saturation) differ by approximately zero (0).

In still further embodiments, a controller 78 determines whether power should be applied to the electronic device without comparing the moisture content of the electronic device to ambient conditions.

If the level of moisture in the electronic device measured by moisture sensor 17 is above a threshold, i.e., electronic device has been exposed to excessive amounts of moisture, power interrupter 8 will keep the electronic device isolated from the power supply. For example, if controller 78 determines that the moisture within the electronic device is too high to connect the electronic device to the power source (such as if the difference in moisture content between ambient conditions and the conditions within the electronic device are greater than approximately zero), the microcontroller maintains a disconnected state (sometimes referred to as a "tripped" state) between the electronic device and the electrical power source, such as by not sending a signal to signal line 92, which will cause transistor 96 to remain de-energized and relay 75 to remain open. In some embodiments, the disconnected state is the normal state for relay 75, creating a fail-safe mode that prevents the electronic device from being connected to the power source unless the detected moisture is below a predetermine threshold. In some embodiments, relay 75 is physically biased, such as by a spring, to the disconnected state to ensure power interrupter 8 returns to a safe state if power is interrupted. In some embodiments controller 78 will activate a signal (e.g., a visual signal such as red LED 84) when controller 78 determines that the moisture level in the electronic device is too high to connect electrical power.

In some embodiments, controller 78 continuously powers motor 20 while electronics control unit 10 is in a "tripped" state, which maintains a scavenging state on phone 62 while sampling moisture sensor 17 by controller 78 via signal wire 88. In alternate embodiments, the sampling may be continuous, at pre-programmed intervals, or upon command by a user. If the scavenging of air from the electronic device (e.g., phone 62) sufficiently dries the electronic device, controller 78 would detect this state and thereafter allow connection of the electronic device to the power source.

If the level of moisture in the electronic device measured by moisture sensor 17 is below a threshold, i.e., electronic device has not been exposed to excessive amounts of moisture, power interrupter 8 will supply power to the electronic device. For example, when controller 78 determines that the electronic device is sufficiently dry to connect electrical power to the electronic device, controller 78 connects electronic device to electrical power, such as by sending a signal to signal line 92, which causes transistor 96 to energize and close relay 75 (which may be open in its normal state), and to thereby provide power to electronic device connector 16. With connector 16 connected to the electronic device (e.g., phone 62), power from cable 14 is supplied to phone 62. In some embodiments controller 78 will activate a signal (e.g., a visual signal such as a green LED 86) when controller 78 determines that the electronic device is sufficiently dry to connect electrical power and/or power is provided to the electronic device.

Some embodiments include an optional capacitive sensing plate 80 (see, e.g., FIG. 7) to detect the increased capacitance from a user's hand and determine when the power interrupter 8 is being handled by a user. For example, in the embodiment depicted in FIG. 7, capacitive sensing plate 80 signals controller 78, via signal line 90 and capacitive signal sensor 82, that a user is handling the power interrupter 8. Controller 78 can then use this information is a variety of ways. For example, controller 78 can initiate sampling of ambient air, such as to obtain a baseline humidity measurement, once it determines a user is handling power interrupter 8.

Controller 78 may also use the information concerning whether power interrupter 8 is being held to signal the user. For example, in at least one embodiment, controller 78 activates a signal (e.g., red LED 84) to indicate to a user that the user may touch (e.g., grasp) electronics control unit 10. In an alternate embodiment, controller 78 activates a user signal to indicate that ambient air is being sampled, such as by commanding a light (e.g., red LED 84) to illuminate and/or flash on and off while ambient air is being sampled. Controller 78 may further turn off red LED 84 once a baseline humidity (e.g., ambient relative humidity) is determined, which may signal a user that the power interrupter 8 is then ready for connection to a portable electronic device. Another light (e.g., green LED 86) may also be used to signal a user that the power interrupter 8 is ready for connection to a portable electronic device, such as by being commanded to illuminate and/or flash on and off. Although the preceding description of solidly lit and flashing lights provides one form of visual feedback or indicia to the user, it should be understood that various combinations of flashing/solid lights, audible signals (e.g., chimes and buzzers), and/or tactile feedback (e.g., vibrators) can be used to inform the user of the proper sequence for connecting the power interrupter 8 to an electronic device.

In further embodiments, contact by a user can result in relay 75 being commanded to the "open" condition so that no electrical energy is supplied to connector 16. Once the user touches power interrupter 8, the capacitive sensing plate 80 provides a capacitive signal to capacitive signal sensor 82, which sends a signal (via signal wire 90) to controller 78, causing controller 78 to maintain relay 75 in the open condition while allowing moisture sensor 17 to monitor air moisture levels. If after a period of time (e.g., approximately 10-15 seconds) the relative humidity difference is not reduced to within appropriate levels, controller 78 maintains relay 75 in the open condition while sampling moisture sensor 17 and allowing moisture sensor 17 to monitor scavenged air moisture levels from within the electronic device.

In some embodiments, the state of scavenging and monitoring moisture while interrupting power to connector 16 can be manually commanded by a user to "reset" the device to its initial sensing configuration.

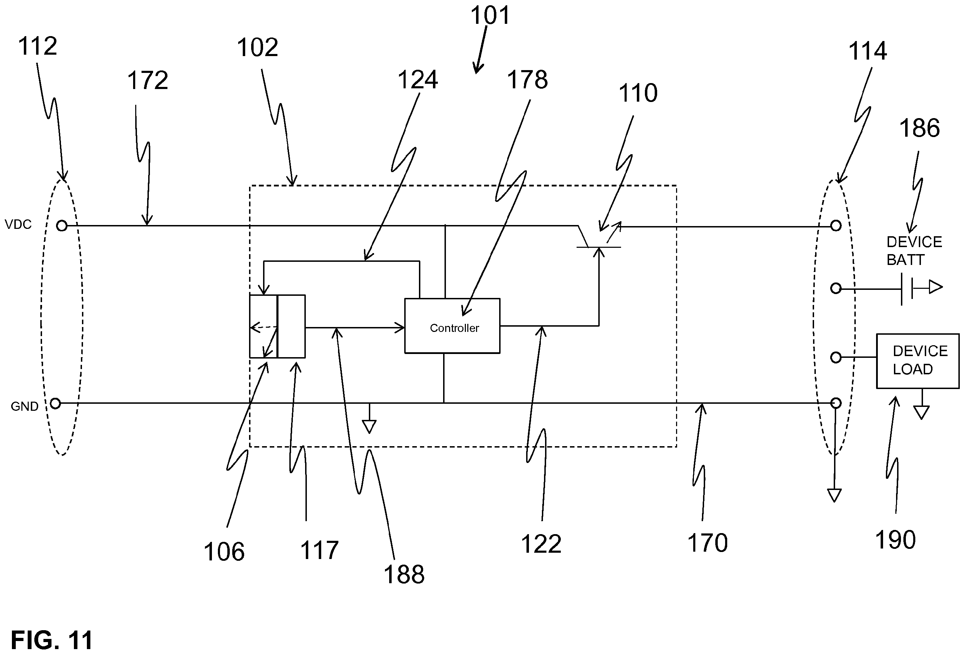

In still further embodiments, power interrupter 8 may be incorporated directly into an electronic device to sample the moisture within the device (and in some embodiments compare with the moisture of the ambient conditions) and determine whether the moisture level is sufficiently low to connect the power source to other portions of the electronic device. At least one such embodiment is discussed with respect to FIG. 11. In some embodiments, the power interrupter 8 integrated into the electronic device will default to maintaining a disconnected state between the power source and the remaining portions of the electronic device unless the moisture detector detects that the device is sufficiently dry to permit connection to the power source without damaging the device.

When incorporated into the electronic device itself, the power interrupter will function as a front end protection circuit for the device, and will include a power input for connecting the power interrupter to a power source and to a power output for connecting the power interrupter to the power input circuitry of the device. The power interrupter can utilize the input power to bias the power interrupter circuitry and protect the remaining electronics in the electronic device.

In some embodiments, relay 75 is a double pole, double throw (DPDT) relay, which permits the disconnection of the device battery within the electronic device itself, and is capable of protecting not only the device load but the device charging circuitry from the device battery itself.

Referring now to FIG. 8, in at least one embodiment pump 7 (e.g., micro impeller 30) increases the pressure within connector 16, which can force gas (e.g., air) into the electronic device to which power interrupter 8 is connected. For example, at least one embodiment is capable of reversing the rotational direction of micro impeller 30, switching power interrupter 8 from a device that draws air from within the electronic device to which power interrupter 8 is connected to a device that forces air into the electronic device to which power interrupter 8 is connected. In the example depicted in FIG. 8, impeller 30 spins in direction 39 (the clockwise direction as depicted from the reader's perspective) and generates air vectors 45 (generally moving gas into impeller 30) and 47 (generally moving gas out from aperture 32), resulting in aperture 32 being an exhaust port 33 for pump 7.

FIG. 9 depicts a generalized airflow pattern occurring within and around scavenged air enclosure 18 when pump 7 is driven in the reverse direction from the direction depicted in FIGS. 3-5, which may occur when motor 20 is signaled to reverse its direction.

FIG. 10 depicts a schematic circuit diagram of an example power interruption apparatus and/or method for interrupting power to an electronic device, which may be used with one or more embodiments described herein, e.g., the embodiments depicted and described with respect to FIGS. 1-6 and 8-9. Elements depicted in FIG. 10 with reference numerals similar to or the same as those depicted in other figure(s), e.g., FIG. 7, function similarly to or the same as the elements in the other figure(s) except as shown and/or described. The circuitry depicted in FIG. 10 also includes portions which may be used to detect whether connector 16 is electrically connected to the electronic device being tested.

A switch, e.g., relay 75A, selectively controls power to the electronic device connector 16. Relay 75A (depicted as a single pole double throw (SPDT) relay in FIG. 10) allows electrical energy (e.g., 5V from USB connector 12) to be present on the collector of a switch (e.g., bias transistor 97) in the non-energized position. A current sensor (e.g., precision current sensor 83) utilizes voltage across a resistor (e.g., Rₛₑₙₛₑ resistor 81) to determine if leakage current is flowing into electronic device connector 16 via common power line 93, which provides electrical connectivity and current flow through Rₛₑₙₛₑ resistor 81. Microcontroller 78 biases transistor 97 and allows current to flow through Rₛₑₙₛₑ resistor 81 when electronic device connector 16 is connected to a portable electronic device.

The size of the Rₛₑₙₛₑ resistor 81 can be set to limit the leakage current to an amount that will not damage a wet portable electronic device. In at least one embodiment, the size of Rₛₑₙₛₑ resistor 81 limits the leakage current to no greater than approximately 10 milliamperes. In at least one embodiment, the resistance of Rₛₑₙₛₑ resistor 81 is approximately 500 ohms. In other embodiments, the resistance of Rₛₑₙₛₑ resistor 81 is at least approximately 200 ohms and at most approximately 1000 ohms.

Current sensor 83 senses the amount of leakage current and provides an electrical signal 85 to microcontroller 78. Microcontroller 78 can use the information about the leakage current from current sensor 83 to determine whether electronic device connector 16 is connected to a portable electronic device without damaging the portable electronic device.

Control circuitry, such as half bridge amplifier 76, can be used to control motor 20. For example, in at least one embodiment, half bridge amplifier 76 reverses pump 7 (such as via controller 78 and directional control lines 91 and 94) so that the flow through pump 7 changes direction (such as by the motor bias lines 91A and 95 toggling from 5VDC and ground potential) when the device changes from a calibration mode to a device sampling mode.

In use, the circuitry depicted in FIG. 10 samples precision current sensor 83 to determine if connector 16 is connected to a portable electronic device. This sampling of precision current sensor 83 may be done, for example, when power is applied to the power interrupter or after a set period after power is applied to the power interrupter.

If microcontroller 78 does not receive an electrical signal 85 from current sensor 83, microcontroller 78 determines that connector 16 is not connected to a portable electronic device. When this occurs, microcontroller 78 can signal motor 20, via control lines 91 and 94, to actuate pump 7 to draw ambient air 55 into the power interrupter as depicted in FIG. 9, i.e., though exhaust ports 52. As such, ambient air is imparted onto moisture sensor 17 to provide a real-time ambient humidity determination. In alternate embodiments, pump 7 is actuated to draw ambient air 55 into the power interrupter as depicted in FIG. 5, i.e., through connector 16, when microcontroller 78 determines that connector 16 is not connected to a portable electronic device. In still further embodiments, ambient air may be drawn in through an alternate ambient air passageway allowing the moisture detector(s) to sample ambient air while connector 16 is connected to the electronic device, without reversing the direction of flow induced by pump 7, and without pumping air into the electronic device.

If microcontroller 78 receives an electrical signal 85 from current sensor 83, microcontroller 78 determines that connector 16 is connected to an electronic device. With the leakage current being low, this functionality allows microcontroller 78 to determine if an electronic device is connected to electronic device connector 16 without damaging the electronic device. When this occurs, microcontroller 78 can bias motor 20 in the forward direction allowing pump 7 to provide a vacuum to connector 16 to sample the air within the electronic device to which connector 16 is connected and deliver the sampled air to moisture sensor 17. Microcontroller 78 can then determine if portable electronic device is sufficiently dry, such as by determining if the moisture level within the sampled air is below a predetermined threshold. In at least one embodiment, microcontroller 78 uses the calibration humidity from the ambient air as a baseline to determine if the electronic device is sufficiently dry. If dry, microcontroller 78 signals SPDT relay 75A of FIG. 10 to energize via relay signal 92, which results in the SPDT relay 75A switching out the Rₛₑₙₛₑ resistor 81 and providing a full 5 VDC to connector 16.

In some embodiments, microcontroller 78 modulates motor 20 to sequence pump 7 in backward and forward directions to periodically sample ambient air. In still another embodiment, pump 7 can periodically draw ambient air using valves without the need to reverse the flow of gas through pump 7.

In some embodiments, connector 16 may include additional structure to enhance the pneumatic connection between connector 16 and the electronic device, such as pliable seals or o-rings.

Depicted in FIG. 11 is a schematic representation of a power interrupter 101 integrated with the electronic circuitry of the electronic device that power interrupter 101 protects according to one embodiment of the present disclosure. Power interrupter 101 can be enclosed within the electronic device it protects, although in alternate embodiments power interrupter may not be fully enclosed within the electronic device it protects. In some embodiments, portions of the circuitry of power interrupter 101 is housed in an external device that selectively connects to and disconnects from the electronic device it protects. In alternate embodiments, portions of the circuitry of power interrupter 101 are housed in an external device and portions are housed within the electronic device that power interrupter 101 is protecting.

In at least one embodiment, power interrupter 101 is compatible with and may be connected to external power interrupters, such as the power interrupter depicted in FIG. 1.

Power from an external charging cord (e.g., charging cord 14) can be supplied to apparatus 101 through input power connecter 112. Input power connector 112 presents power to the circuitry of power interrupter 101 through power bus 172 (which may be, e.g., a 5 VDC power bus) and ground bus 170. This circuitry may be positioned within a module 102, and in at least one embodiment module 102 is hermetically sealed.

Moisture sensor 117 communicates with the interior environment of the electronic device and can detect the moisture level within the electronic device. In embodiments utilizing a hermetically sealed module 102, moisture sensor 117 can be sealed within hermetic sealed module 102 with the moisture sensing portion of moisture sensor 117 communicating with the interior of the electronic device.

In at least one embodiment, moisture sensor 117 is optionally attached to a valve (e.g., a micro-fluidic 3-way valve 106), which has a port internal to electronic device and a port external to the electronic device. A pump (one example being pump 7) may also be used in some embodiments to place moisture sensor 117 in communication with the interior of the electronic device.

A controller 178 (which in some embodiments is a microcontroller) is connected to and powered through charging cable bus 172 and ground bus 170, and receives information from the moisture sensor 117 via moisture sensor signal 188. Controller 178 controls switching transistor 110 through switching transistor control signal 122, and transistor 110 is connected to electronic device charging bus 114, which is connected to the electronics within the electronic device. Electronic device charging bus 114 provides electrical control and stimulus to device battery 186 and device load (e.g. radio, screen, etc.) 190.

Controller 178 may also control the valve (when included, which may take the form of micro-fluidic 3-way valve 106) through micro-fluidic valve control signal 124.

Depending on the state of transistor 110, electronic device charging bus 114 is either connected to or disconnected from the power source. When connected, various components of the electronic device may be powered by the power source, including the operational circuitry and/or the battery charging circuitry, depending on the internal structure of the electronic device. When disconnected, the internal circuitry of the electronic device is disconnected from power, which may prevent damage to the electronic device when the moisture level in the electronic device is sufficiently high.

When the moisture level detected by moisture sensor 117 is at or beyond a first threshold, controller 178 will inhibit or maintain a disconnected state between the power source and the electronic device charging bus 114, thereby protecting portions of the electronic device that may be damaged when electrical power is applied under high moisture conditions.

When the moisture level detected by moisture sensor 117 is at or below a second threshold (which may or may not be the same as the first threshold), controller 178 will permit and/or maintain a connected state between the power source and the electronic device charging bus 114, thereby allowing portions of the electronic device connected to charging bus 114 (such as the battery charging or electronic device operational circuits) to receive electrical power.

In at least one embodiment where the power interrupter is incorporated into the electronic device (and in other embodiments disclosed herein), the moisture detector can be at least partially sealed (e.g., hermetically sealed) to enhance its water-resistant (or waterproof) features. When sealed, a portion of the moisture detector's sensor face (e.g., silicon surface) will be exposed to the gas within (or the gas sampled from within) the electronic device. In one example, a micro-fluidic 3-way valve may be attached to the moisture detector (one example being a relative humidity sensor) to allow communication between the moisture detector and the gas within the electronic device. The moisture detector may include a small signal relay or switching transistor controlled by a microcontroller that may be sealed to avoid exposure to the gas within the electronic device.

In some embodiments, the micro-fluidic 3-way valve is a MEMs type of device with one port being pneumatically connected to the outside of the electronic device for purposes of measuring the outside ambient humidity, while another port is pneumatically connected to the inside of the electronic device for purposes of sampling the gas within the electronic device. A microcontroller can provide switching signals for the micro-fluidic 3-way valve and a switching transistor that controls power to the remaining portions of the electronic device. The microcontroller can compare the outside ambient conditions to the conditions within the electronic device and determine if the switching transistor signal to the transistor should be biased.

In some embodiments, the power interrupter 101 includes a reset function similar to a Ground Fault Circuit Interrupter (GFCI). The reset could be an electro-mechanical type of reset, and could use a small reset port or a capacitive sensor.

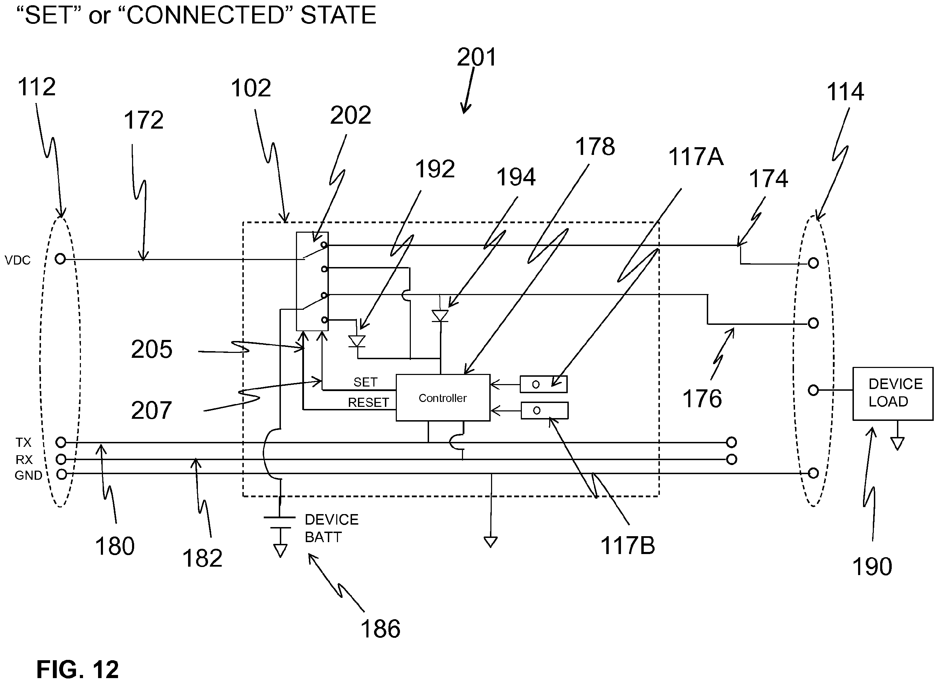

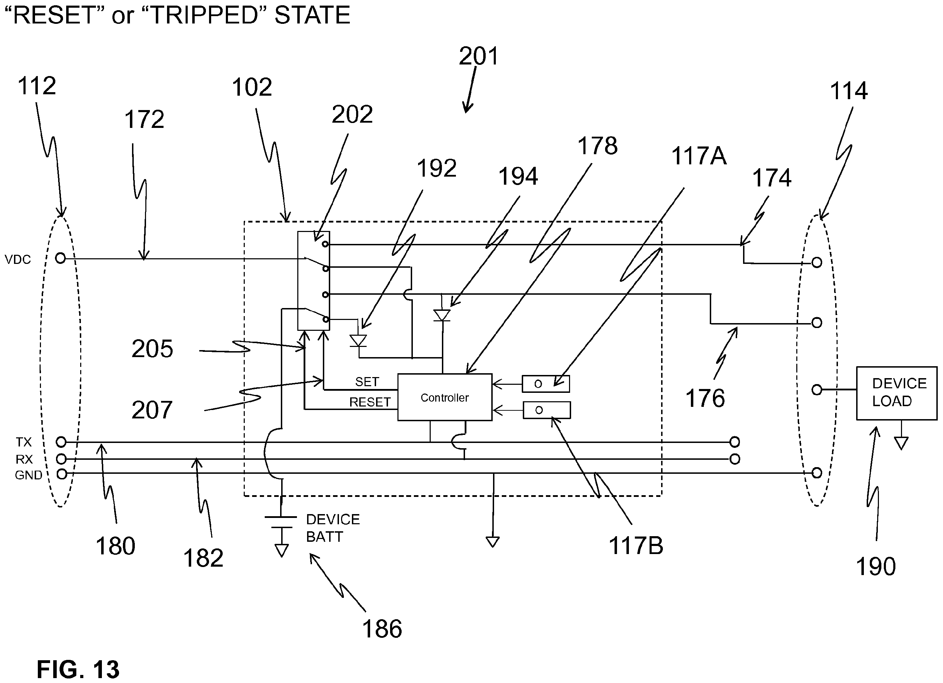

When the moisture level within an electronic device exceeds a certain threshold (e.g., the electronic device is considered unacceptably "wet"), electrical power from the device's power storage member (e.g., battery or capacitor) can damage the circuitry of the device. Embodiments of the present disclosure interrupt the flow of electrical power from the device's power storage member to portions of the device's circuitry, including interrupting power to all portions of the electronic device outside of the battery. For example, FIGS. 12 and 13 depict schematic circuit diagrams of a power interrupter 201 for an electronic device that disconnects the device's battery from portions of the device's circuitry when the moisture within the device is sufficiently high, e.g., exceeds a threshold according to one embodiment of the present disclosure. FIG. 12 depicts power interrupter 201 in a "set" (connected) state. FIG. 13 depicts power interrupter 201 in a "reset" (disconnected or tripped) state. Elements depicted in FIGS. 11 and 12 with reference numerals similar to or the same as those depicted in other figure(s), e.g., FIG. 10, function similarly to or the same as the elements in the other figure(s) except as shown and/or described. Power interrupter 201 is typically enclosed within the electronic device it protects, although in alternate embodiments power interrupter may not be fully enclosed within the electronic device it protects. In some embodiments, portions of the circuitry of power interrupter 201 is housed in an external device that connects to and disconnects from the electronic device it protects. In alternate embodiments, portions of the circuitry of power interrupter 201 are housed in an external device and portions are housed within the electronic device power interrupter 201 is protecting.

Device battery 186, which is typically housed within an electronic device, is electrically connected to an input leg of a relay, e.g., Double Pole, Double Throw (DPDT) relay 202. Electrical power from power connector 112 is electrically connected to another input leg of relay 202. In one embodiment, the electrical power is 5VDC, although different levels and/or types of power may be used in other embodiments. In one embodiment, relay 202 is a "latched" type of relay, wherein RESET signal 205 and SET signal 207 are pulsed to provide minimal power to change relay 202 state (e.g. from tripped to set). In other embodiments, relay 202 is transistorized for low power consumption.

In other embodiments, the power interrupter 201 includes a communications routine housed within controller 178. In one example embodiment, power interrupter 201 may be electrically reset through power connector 112, such as by receiving electrical reset signals communicated through power connecter transmit line 180 and power connecter receive line 182.

Interrupter 201 preferably includes one or more moisture sensors. For example, in the depicted embodiment interrupter 201 includes an ambient humidity sensor 117B and a device humidity sensor 117A mounted within the electronic device. Ambient humidity sensor 117B includes (or is connected to) an ambient air sampling port for sampling gas (e.g., air) outside the electronic device. Device humidity sensor 117A includes (or is connected to) an electronic device sampling port for sampling gas (e.g., air) within the electronic device. Humidity sensors 117B and 117A can be used to determine the relative humidity difference from outside and inside the electronic device, such as by means of computation using controller 178.

Blocking diodes 192 and 194 may be used to prevent electrical power feedback to/from power connector 112 and device battery 186.

In one embodiment, the "set" state (sometimes referred to as the "connected" state) of power interrupter 201 depicted in FIG. 12 permits electrical power from power connector 112 to flow through relay 202 and into device charging circuit 114 via power transfer line 174. Charging circuit 114 is electrically connected to device battery 186 via battery transfer line 176. Device load 190 is unaffected by charging bus 114, and charging bus 114 operates as if device battery 186 was integrated into device charging circuit 114. Stimulus power for power interrupter 201 may be provided by device battery 186 or by external power through power connector 112.

As depicted in FIG. 13, upon controller 178 determining through humidity sensor 117A (and in some embodiments with humidity sensor 117B also) that the moisture in the electronic device exceeds a threshold (e.g., the electronic device is unacceptably "wet"), controller 178 sends a reset signal, such as by sending a pulsed signal 205, to relay 202. In response, relay 202 "trips" and disconnects the electrical power being supplied from power connector 112 to charging circuit 114. Relay 202 simultaneously disconnects power being supplied from device battery 186 to charging circuit 114, preventing possible damage and/or overheating that may otherwise be caused by device battery 186. Controller 178 may then continue to poll humidity sensors 117A (and in some embodiments 117B) until device battery 186 is discharged or power from power connector 112 is removed.

Once tripped, power interrupter 201 can be reset, such as by handshaking on communications bus transmit line 180 and/or communications bus receive line 182. External signals may be communicated to controller 178 using power connector 112, which also houses communications bus. Controller 178 may be externally commanded (and/or internally commanded through communication algorithms within controller memory 100) to sample the humidity conditions within the electronic device, and in some embodiments to also sample ambient humidity conditions.

Some embodiments of power interrupter 201 sample the moisture conditions after some drying technique (such as some of the drying techniques employed herein) is employed to remove the moisture from within the device. Once controller 178 determines that the moisture level is below a threshold (e.g., sufficiently close to zero), controller 178 is commanded (e.g., via transmit and receive communication (handshaking) lines 180 and 182) to reset, such as by pulsing reset signal 205. Reset signal 205 reverts the relay 202 back to the set state and electrical power is allowed to flow into charging circuit 114 and device battery 186.

Power interrupter 201 may be enclosed in a hermetically sealed encasement (e.g., a moisture-resistant epoxy or glob-top) and isolated from the rest of the electronic device it protects.

Circuitry similar to the circuitry depicted in FIGS. 12 and 13 may be adapted to allow an external device, such as a power cord, to interrupt electrical power from the electronic device's battery to portions of the electronic device's circuitry when the external device detects moisture within the electronic device is too high, e.g., exceeds a threshold.

Controller 78/178 can be a microcontroller, general purpose microprocessor, or generally any type of controller or processor that can perform the requisite control functions. Controller 78/178 can read its program from memory 100, and may be comprised of one or more components configured as a single unit. Alternatively, when of a multi-component form, controller 78/178 may have one or more components located remotely relative to the others. One or more components of controller 78/178 may be of the electronic variety including digital circuitry, analog circuitry, or both. In one embodiment, controller 78/178 is of a conventional, integrated circuit microprocessor arrangement, such as one or more CORE i7 HEXA processors from INTEL Corporation (450 Mission College Boulevard, Santa Clara, California 95052, USA), ATHLON or PHENOM processors from Advanced Micro Devices (One AMD Place, Sunnyvale, California 94088, USA), POWER8 processors from IBM Corporation (1 New Orchard Road, Armonk, New York 10504, USA), or PIC Microcontrollers from Microchip Technologies (2355 West Chandler Boulevard, Chandler, Arizona 85224, USA). In alternative embodiments, one or more application-specific integrated circuits (ASICs), reduced instruction-set computing (RISC) processors, general-purpose microprocessors, programmable logic arrays, or other devices may be used alone or in combination as will occur to those skilled in the art.

Likewise, memory 100 in various embodiments includes one or more types such as solid-state electronic memory, magnetic memory, or optical memory, just to name a few. By way of non-limiting example, memory 100 can include solid-state electronic Random Access Memory (RAM), Sequentially Accessible Memory (SAM) (such as the First-In, First-Out (FIFO) variety or the Last-In First-Out (LIFO) variety), Programmable Read-Only Memory (PROM), Electrically Programmable Read-Only Memory (EPROM), or Electrically Erasable Programmable Read-Only Memory (EEPROM); an optical disc memory (such as a recordable, rewritable, or read-only DVD or CD-ROM); a magnetically encoded hard drive, floppy disk, tape, or cartridge medium; or a plurality and/or combination of these memory types. Also, memory 100 may be volatile, nonvolatile, or a hybrid combination of volatile and nonvolatile varieties. Memory 100 in various embodiments is encoded with programming instructions executable by controller 78 to perform the automated methods disclosed herein.

Moisture sensor 17/117 as described herein with respect to at least one embodiment may detect absolute humidity, relative humidity, and/or specific humidity. Moreover, the moisture detector may detect the amount of water (vapor or otherwise) in the electronic device and/or the amount of another gas or liquid that can damage the electronic device if the electronic device has been exposed to the gas or liquid and the electronic device is thereafter connected to an electrical power source.

Although a USB Mini-B connector is depicted herein as a connector 16 for power interrupter 8, other embodiments include any form of standardized or specialized connectors tailored to provide electrical power to specific electronic devices.

Although depicted as a centrifugal pump, pump 7 takes different forms (such as a positive displacement pump or alternate types of dynamic pumps) in alternate embodiments.

In the methods and apparatuses described herein, reference is frequently made to sampling gas (and/or moisture) from within the electronic device and determining whether there are any constituents of the gas (which can include moisture, e.g., water vapor) that could cause a malfunction in the electronic device. One example gas that is sampled is air, which is a combination of various gasses and may contain gaseous water, liquid water, and/or other element (or compounds) that could cause the electronic device to malfunction. However, any type of gas that may be within the electronic device (or introduced into the device) may be sampled, and the gas may be evaluated to determine whether there are any type(s) of elements or compounds in the electronic device that could cause the electronic device to malfunction.

As used herein, moisture can refer to any gas, liquid, element or compound that is suspended in (or part of) the gas that is within an electronic device, and in particular can be a gas, liquid, element or compound that can have detrimental effects on the operation of an electronic device when the electronic device is exposed to the moisture. One common example of moisture that can have a detrimental effects on electronic devices is water, either in a gaseous or liquid (e.g., vapor or droplet form, or condensed on a surface) state.

Various aspects of different embodiments of the present disclosure are expressed in paragraphs X1, X2, X3, X4, X5, X6, and X7 as follows:
X1. One embodiment of the present disclosure includes an apparatus for connecting an electronic device to a power source (e.g., an electrical power source), comprising: a power connector configured and adapted to removably connect to and receive electrical energy form an electrical power source; a device connector configured and adapted to removably connect to and deliver electrical energy to an electrical power receptacle of an electronic device; a switch connected to the power connector and the device connector, the switch including a connected condition wherein the power connector is electrically connected to the device connector, and a disconnected condition wherein the power connector is electrically disconnected from the device connector; a pneumatic connector configured and adapted to removably connect to and draw gas from a port of an electronic device; a moisture detector connected to the switch; and a pump connected to the pneumatic connector and the moisture detector, the pump configured and adapted to move gas from the pneumatic connector to the moisture detector; wherein the disconnected condition of the switch is maintained when the power connector is connected to an electrical power source, the device connector is connected to an electrical power receptacle of an electronic device, the pneumatic connector is connected to a port of the electronic device, and the moisture detector detects moisture in the gas from the pneumatic connector exceeds a first predetermined threshold; and wherein the connected condition of the switch is maintained when the power connector is connected to an electrical power source, the device connector is connected to an electrical power receptacle of an electronic device, the pneumatic connector is connected to a port of the electronic device, and the moisture detector detects moisture in the gas from the pneumatic connector does not exceed a second predetermined threshold.
X2. Another embodiment of the present disclosure includes an apparatus, comprising: an electrical connector configured and adapted to connect to a power source and to the power input circuitry of an electronic device, the electrical connector having a connected state, wherein the power source is connected to the power input circuitry of an electronic device, and a disconnected state, wherein the power source is disconnected from the power input circuitry of an electronic device; a moisture detector connected to the electrical connector; and a pump configured and adapted to move gas from within an electronic device to which the electrical connector is connected to the moisture detector; wherein the electrical connector is maintained in the disconnected state when the moisture detector detects moisture in a gas from within an electronic device to which the electrical connector is connected is greater than or equal to a first predetermined threshold; and wherein the electrical connector is maintained in the connected state when the moisture detector detects moisture in a gas from within the electronic device to which the electrical connector is connected is less than a second predetermined threshold.
X3. Another embodiment of the present disclosure includes a method, comprising the acts of: sampling air from within an electronic device; measuring the amount of moisture in the sampled device air; and maintaining a disconnection between the source of electrical power and the electronic device when the amount of moisture within the sampled device air exceeds a first predetermined threshold.
X4. Another embodiment of the present disclosure includes an electrical power device configured and adapted to connect to and disconnect from an electronic device, comprising: an electronic device connector configured and adapted to connect to and disconnect from an electronic device; a power connector; a water vapor sensor; and a switch connected to the electronic device connector, the power connector, and the water vapor sensor; wherein, when the electronic device connector is connected to an electronic device and the power connector is connected to a source of electrical power, the water vapor sensor senses the level of water vapor in the electronic device, and the switch inhibits connection of the power connector to the electronic device connector when the sensed water vapor level from within the electronic device is not below a first threshold.
X5. Another embodiment of the present disclosure includes a method of manufacturing an electrical connector, comprising the acts of: connecting a moisture sensor to a pneumatic connector, the moisture sensor configured and adapted to detect the level of moisture in a gas, and the pneumatic connector configured and adapted to connect to a port in pneumatic communication with the interior of an electronic device; connecting a switch to the moisture sensor; connecting the switch to a power input connector, the power input connector being configured and adapted to connect to and receive electrical power from a power source; and connecting the switch to a power output connector, the power output connector being configured and adapted to connect to and deliver electrical power to an electrical power port of an electronic device; wherein the switch maintains an electrical connection between the power input connector and the power output connector when the moisture sensor detects a level of moisture in a gas received from the pneumatic connector is below a first threshold.
X6. Another embodiment of the present disclosure includes an apparatus, comprising: a moisture detector configured and adapted to obtain gas from an electronic device and detect the moisture level within a gas sample; and a switch connected to the moisture detector, the switch configured and adapted to connect to a source of electrical power and to the power input circuitry of an electronic device, the switch including a disconnected state wherein the switch is configured and adapted to electrically isolate a source of electrical power to which the switch is connected from the power input circuitry of an electronic device to which the switch is connected when the moisture detector detects the moisture within the electronic device to which the switch is connected is at or above a first predetermined threshold.
X7. Another embodiment of the present disclosure includes an apparatus, comprising: a moisture detector; and means for controlling the flow of electrical energy from a power source to which the moisture detector is connected to an electronic device to which the moisture detector is connected in response to the moisture detected by the moisture detector.

Yet other embodiments include the features described in any of the previous statements X1, X2, X3, X4, X5, X6, or X7, as combined with
(i) one or more of the previous statements X1, X2, X3, X4, X5, X6, or X7,
(ii) one or more of the following aspects, or
(iii) one or more of the previous statements X1, X2, X3, X4, X5, X6, or X7 and one or more of the following aspects:
   Wherein the disconnected condition of the switch is maintained when the moisture detector is malfunctioning.

Wherein the disconnected state of the electrical connector is maintained when the moisture detector is malfunctioning.

Determining whether the device performing said measuring is malfunctioning.

Maintaining a disconnection between the source of electrical power and the electronic device when the device performing said measuring is malfunctioning.

Wherein the switch inhibits connection of the power connector to the electronic device connector when the water vapor sensor is malfunctioning.

Wherein the switch maintains an electrical disconnection between the power input connector and the power output connector when the moisture sensor is malfunctioning.

Wherein the disconnected state of the switch is maintained when the moisture detector is malfunctioning.

Means for determining when the moisture detector is malfunctioning.

Wherein said means for controlling the flow of electrical energy from a power source to which the moisture detector is connected to an electronic device to which the moisture detector is connected electrically disconnects a power source to which the moisture detector is connected from an electronic device to which the moisture detector is connected when said means for determining determines the moisture detector is malfunctioning.

Wherein the moisture detector detects water vapor, and wherein the first and second thresholds are water vapor thresholds.

Wherein the moisture detector detects humidity, and wherein the first and second thresholds are humidity thresholds.

Wherein the moisture detector detects water vapor, and wherein the first and second predetermined thresholds are water vapor thresholds.

Wherein the moisture detector detects humidity, and wherein the first and second predetermined thresholds are humidity thresholds.

Wherein said measuring includes measuring the water vapor in the sampled device air.

Wherein said measuring includes measuring the humidity in the sampled device air.

Wherein the water vapor sensor senses the humidity in the electronic device, and wherein the first and second thresholds are humidity thresholds.

Wherein the moisture sensor is configured and adapted to detect water vapor; and wherein the first and second thresholds are water vapor thresholds.

Wherein the moisture sensor is configured and adapted to detect humidity; and wherein the first and second thresholds are humidity thresholds.

Wherein the moisture detector detects water vapor, and wherein the first and second thresholds are water vapor thresholds.

Wherein the moisture detector detects humidity, and wherein the first and second thresholds are humidity thresholds.

Wherein the moisture detector detects water vapor in the electronic device to which the moisture detector is connected, and wherein said means for controlling is in response to the water vapor detected by the moisture detector.

Wherein the moisture detector detects humidity in the electronic device to which the moisture detector is connected, and wherein said means for controlling is in response to the humidity detected by the moisture detector.

Maintaining a connection between the source of electrical power and the electronic device when the amount of moisture within the sampled device air does not exceed the second predetermined threshold.

Wherein the switch maintains an electrical disconnection between the power input connector and the power output connector when the moisture sensor detects a level of moisture in a gas received from the pneumatic connector is at or above a second threshold.

Wherein the switch includes a connected state wherein the switch is configured and adapted to electrically connect a source of electrical power to which the switch is connected from the power input circuitry of an electronic device to which the switch is connected when the moisture detector detects the moisture within the electronic device to which the switch is connected is below a second predetermined threshold.

Wherein said sampling includes moving air from within the electronic device to a moisture detector.

Wherein said measuring includes measuring the amount of moisture in the sampled device air with the moisture detector.

Wherein said sampling includes decreasing pressure within the power interrupter.

Wherein the switch connects the power connector to the electronic device connector when the sensed water vapor level from within the electronic device is below a second threshold.

A pneumatic connector configured and adapted to connect to a port of an electronic device.

A pump configured and adapted to move gas from the pneumatic connector to the water vapor sensor.

Wherein, when the electronic device connector and the pneumatic connector are connected to an electronic device and the power connector is connected to a source of electrical power, the pump moves gas from the electronic device to which the pneumatic connector is connected to the water vapor sensor.

Connecting a pneumatic pump to the moisture sensor and the pneumatic connector, wherein the pump moves gas from the pneumatic connector to the moisture sensor.

A pump configured and adapted to move gas from an electronic device to the moisture detector.

Means for moving air from within the electronic device to the moisture detector.

Wherein the electrical connector, the moisture detector, and the pump are located within a device configured and adapted to removably connect to an electronic device.

Wherein the power connector is configured and adapted to connect to and disconnect from a power source.

Wherein the pneumatic connector and the power output connector are configured and adapted to connect to and disconnect from one or more external ports of an electronic device.

Wherein the pneumatic connector is configured and adapted to connect to an internal port of an electronic device and remain connected to the internal port of the electronic device during user operation.

Wherein the moisture detector and the switch are configured and adapted to repeatedly connect to and disconnect from one or more external ports of an electronic device by hand.

Means for repeatedly connecting the moisture detector to a power source and an electronic device.

Means for repeatedly disconnecting the moisture detector from a power source and an electronic device.

Wherein the electrical connector, the moisture detector, and the pump are located within the electronic device to which the electrical connector is connected.

Wherein the moisture detector is configured and adapted to connect to an internal port of an electronic device and remain connected to the internal port of the electronic device during user operation.

Wherein the moisture detector is configured and adapted to connect to an internal port of an electronic device and remain connected to the internal port of the electronic device during user operation.

Means for inhibiting the flow of electrical energy from the power source to the electronic device to which the moisture detector is connected when the moisture detected by the moisture detector exceeds a first threshold.

An interrupter connected to the device connector, the interrupter configured and adapted to interrupt the flow of electrical energy from a power storage member in the electronic device to which the device connector is connected to other portions of the circuitry in the electronic device to which the device connector is connected when the moisture detector detects moisture in the gas from the pneumatic connector exceeds a third predetermined threshold.

Wherein the first predetermined threshold and the third predetermined threshold are the same.

Wherein the first predetermined threshold and the third predetermined threshold are different.

An interrupter connected to the electrical connector, the interrupter configured and adapted to interrupt the flow of electrical energy from a power storage member in the electronic device to which the electrical connector is connected to other portions of the circuitry in the electronic device to which the electrical connector is connected when the moisture detector detects moisture in a gas from within an electronic device to which the electrical connector is connected is greater than or equal to a third predetermined threshold.

Wherein the first predetermined threshold and the third predetermined threshold are the same.

Wherein the first predetermined threshold and the third predetermined threshold are different.

Interrupting the flow of electrical energy from a power storage member in the electronic device to other portions of the circuitry in the electronic device when the amount of moisture within the sampled device air exceeds a third predetermined threshold.

Wherein the first predetermined threshold and the third predetermined threshold are the same.

Wherein the first predetermined threshold and the third predetermined threshold are different.

An interrupter connected to the electronic device connector, the interrupter configured and adapted to interrupt the flow of electrical energy from a power storage member in the electronic device to which the electronic device connector is connected to other portions of the circuitry in the electronic device to which the electrical connector is connected when the sensed water vapor level from within the electronic device is not below a third threshold.

Wherein the first threshold and the third threshold are the same.

Wherein the first threshold and the third threshold are different.

Connecting an interrupter to the power output connector, the interrupter configured and adapted to interrupt the flow of electrical power from a power storage member in an electronic device to which the power output connector is configured and adapted to connect to other portions of the circuitry in the electronic device to which the power output connector is configured and adapted to connect when the moisture sensor detects a level of moisture in a gas received from the pneumatic connector is at or above a third threshold.

Wherein the first threshold and the third threshold are the same.

Wherein the first threshold and the third threshold are different.

An interrupter connected to the moisture detector, the interrupter configured and adapted to interrupt the flow of electrical energy from a power storage member in the electronic device to which the moisture connector is connected to other portions of the circuitry in the electronic device to which the moisture connector is connected when the moisture detector detects the moisture within the electronic device to which the switch is connected is at or above a third predetermined threshold.

Wherein the first predetermined threshold and the third predetermined threshold are the same.

Wherein the first predetermined threshold and the third predetermined threshold are different.

Means for interrupting the flow of electrical energy from a power storage member in an electronic device to which the moisture detector is connected to other portions of the circuitry in the electronic device to which the moisture detector is connected when the moisture detected by the moisture detector exceeds a third threshold

Wherein the first threshold and the third threshold are the same.

Wherein the first threshold and the third threshold are different.

A sensor configured and adapted to detect when the device connector is connected to an electrical power receptacle of an electronic device, wherein the disconnected condition of the switch is maintained when the sensor has not detected a connection between the device connector and an electrical power receptacle of an electronic device.

A sensor configured and adapted to detect when the electrical connector is connected to the power input circuitry of an electronic device, wherein the disconnected state of the electrical connector is maintained when the sensor has not detected a connection between the electrical connector and the power input circuitry of an electronic device.

A sensor configured and adapted to detect when the electronic device connector is connected to an electronic device.

Wherein the switch inhibits connection of the power connector to the electronic device connector when the sensor has not detected a connection between the electronic device connector and an electronic device.

Connecting a connection sensor to the switch, the connection sensor configured and adapted to detect when the power output connector is connected to an electrical power port of an electronic device.

Wherein the switch maintains an electrical disconnection between the power input connector and the power output connector when the connection sensor has not detected a connection between the power output connector and an electrical power port of an electronic device.

A sensor configured and adapted to detect when the switch is connected to an electrical power receptacle of an electronic device, wherein the disconnected state of the switch is maintained when the sensor has not detected a connection between the switch and an electrical power receptacle of an electronic device.

Means for detecting when the moisture detector is connected to an electrical power receptacle of an electronic device.

Means for inhibiting the flow of electrical energy from a power source to which the moisture detector is connected to the electrical power receptacle of an electronic device to which the moisture detector is connected when said means for detecting has not detected a connection between the moisture detector and the electrical power receptacle of an electronic device.

Wherein the first predetermined threshold and the second predetermined threshold are the same.

Wherein the first predetermined threshold and the second predetermined threshold are different.

Wherein the first threshold and the second threshold are the same.

Wherein the first threshold and the second threshold are different.

Means for facilitating the flow of electrical energy from the power source to the electronic device to which the moisture detector is connected when the moisture detected by the moisture detector does not exceed a second threshold.

Wherein the pneumatic connector and the device connector are configured and adapted to connect to the same port of an electronic device.

Wherein the pneumatic connector and the device connector are configured and adapted to connect to different ports of an electronic device.

A pneumatic connector configured and adapted to removably connect to and draw gas from a port of an electronic device;

Wherein the pneumatic connector and the electrical connector are configured and adapted to connect to the same port of an electronic device.

Wherein the pneumatic connector and the electrical connector are configured and adapted to connect to different ports of an electronic device.

Wherein said connecting includes connecting an electrical connector of the power interrupter to an electrical port of an electronic device, and connecting a pneumatic connector of the power interrupter to a pneumatic port of an electronic device.

Wherein said sampling air includes sampling air through the pneumatic connector.

Wherein said connecting includes connecting the electrical connector and the pneumatic connector to the same port of an electronic device.

Wherein said connecting includes connecting the electrical connector and the pneumatic connector to different ports of an electronic device.

Wherein said connecting includes connecting the electrical connector and the pneumatic connector to different ports of an electronic device.

Wherein the pneumatic connector and the electronic device connector are configured and adapted to connect to the same port of an electronic device.

Wherein the pneumatic connector and the electronic device connector are configured and adapted to connect to different ports of an electronic device.

Wherein the pneumatic connector and the power output connector are configured and adapted to connect to the same port of an electronic device.

Wherein the pneumatic connector and the power output connector are configured and adapted to connect to different ports of an electronic device.

A pneumatic connector connected to the moisture detector, the pneumatic connector configured and adapted to removably connect to a first port of an electronic device and direct gas from the first port to the moisture detector when connected to the first port.

An electrical connector connected to the switch, the electrical connector configured and adapted to removably connect to a second port of an electronic device and electrically connect the switch and the second port when connected to the second port.

Wherein the pneumatic connector and the electrical connector are configured and adapted to removably connect to the same port of an electronic device.

Wherein the pneumatic connector and the electrical connector are configured and adapted to connect to different ports of an electronic device.

Wherein the means for pneumatically connecting and the means for electrically connecting connect to the same port of an electronic device.

Wherein the means for pneumatically connecting and the means for electrically connecting connect to different ports of an electronic device.

Wherein the moisture detector detects moisture in the ambient air, and wherein the determination of whether the moisture detector detects moisture in the gas from the pneumatic connector does not exceed a second predetermined threshold includes a comparison of the moisture measured in the ambient air and the moisture measured in the gas from the pneumatic connector.

Wherein the moisture detector detects moisture in the ambient air, and wherein the determination of whether moisture in a gas from within the electronic device to which the electrical connector is connected is less than a second predetermined threshold includes a comparison of the moisture measured in the ambient air and the moisture measured from within the electronic device to which the electrical connector is connected.

Sampling ambient air from outside the electronic device.

Measuring the amount of moisture in the sampled ambient air.

Wherein said maintaining a connection between the source of electrical power and the electronic device includes comparing the moisture in the sampled device air to the moisture in the sampled ambient air.

Wherein the water vapor sensor senses the level of water vapor in the ambient air outside the electronic device.

Wherein the determination of whether the sensed water vapor level from within the electronic device is below a first threshold includes a comparison of the sensed water vapor level from within the electronic device and the sensed water vapor level from the ambient air.

Wherein the moisture sensor is configured and adapted to sense the level of moisture in the ambient air outside the electrical connector and outside an electronic device to which the electrical connector is connected.

Wherein the determination whether the moisture sensor detects a level of moisture in a gas received from the pneumatic connector is below a first threshold includes a comparison of the sensed level of moisture in the ambient air and the sensed level of moisture in a gas received from the pneumatic connector.

Wherein the moisture detector detects moisture in the ambient air, and wherein the determination of whether moisture within the electronic device to which the switch is connected is below a first predetermined threshold includes a comparison of the moisture detected in the ambient air and the moisture detected from within the electronic device to which the switch is connected.

Wherein the moisture detector detects moisture in the electronic device to which the moisture detector is connected and in the ambient air outside the electronic device to which the moisture detector is connected.

Wherein the electrical connector includes a standard electrical power connector for connecting the device to a source of power.

Wherein said means for controlling includes a switch, the apparatus comprising:
Means for pneumatically connecting the moisture detector to a pneumatic port of an electronic device.

Means for electrically connecting the switch to an electrical port of an electronic device.

Wherein the power input connector is configured and adapted to repeatedly connect to and disconnect from a power source by hand.

Wherein the power output connector is configured and adapted to repeatedly connect to and disconnect from an electrical power port of an electronic device;

Connecting a power interrupter to a source of electrical power and to the electronic device.

Determining when said connecting occurs, wherein said maintaining a connection occurs after said determining.

Wherein said sampling, measuring, maintaining a disconnection, and maintaining a connection are performed with a power interrupter.

Wherein the electronic device is inoperative.

Wherein the electronic device is inoperative as a result of moisture intrusion.

While illustrated examples, representative embodiments and specific forms of the disclosure have been illustrated and described in detail in the drawings and foregoing description, the same is to be considered as illustrative and not restrictive or limiting. The description of particular features in one embodiment does not imply that those particular features are necessarily limited to that one embodiment. Features of one embodiment may be used in combination with features of other embodiments as would be understood by one of ordinary skill in the art, whether or not explicitly described as such.

## Claims

1. A method, comprising the acts of:
sampling air from within an electronic device;
measuring an amount of moisture in the sampled device air; and
maintaining a disconnection between a source of electrical power and the electronic device when the amount of moisture within the sampled device air exceeds a first predetermined threshold.

2. The method of claim 1, comprising:
maintaining a connection between the source of electrical power and the electronic device when the amount of moisture within the sampled device air does not exceed a second predetermined threshold.

3. The method of claim 1 or 2, comprising:
connecting a power interrupter (8, 101, 201) to the source of electrical power and to the electronic device.

4. The method of claim 3, comprising:
determining when said connecting occurs, wherein said maintaining the connection occurs after said determining.

5. The method of any one of claims 1 to 4, wherein:
said sampling includes moving the air from within the electronic device to a moisture detector; and
said measuring includes measuring the amount of moisture in the sampled device air with the moisture detector.

6. An apparatus, comprising:
a moisture detector,
the apparatus being **characterized in that** the moisture detector is configured to obtain gas from an electronic device and detect a moisture level within a gas sample; and wherein the apparatus further comprises:
a switch (75, 75A; 97; 110) connected to the moisture detector, the switch configured to connect to a source of electrical power and to a power input circuitry of the electronic device, the switch (75, 75A; 97; 110) including a disconnected state, wherein the switch (75, 75A; 97; 110) is configured to electrically isolate the source of electrical power to which the switch (75, 75A; 97; 110) is connected from the power input circuitry of the electronic device to which the switch (75, 75A; 97; 110) is connected when the moisture detector detects the moisture level within the electronic device to which the switch (75, 75A; 97; 110) is connected is at or above a first predetermined threshold.

7. The apparatus of claim 6, wherein the switch (75, 75A; 97; 110) includes a connected state, wherein the switch (75, 75A; 97; 110) is configured to electrically connect the source of electrical power to which the switch (75, 75A; 97; 110) is connected from the power input circuitry of the electronic device to which the switch (75, 75A; 97; 110) is connected when the moisture detector detects the moisture level within the electronic device to which the switch (75, 75A; 97; 110) is connected is below a second predetermined threshold.

8. The apparatus of claim 7, wherein the moisture detector detects water vapor, and wherein the first and the second predetermined thresholds are water vapor thresholds.

9. The apparatus of claim 7, wherein the moisture detector detects humidity, and wherein the first and the second predetermined thresholds are humidity thresholds.

10. The apparatus of any one of claims 6 to 9, comprising:
a pump (7) configured to move the gas from the electronic device to the moisture detector.

11. The apparatus of claim 6, wherein the switch (75, 75A; 97; 110) connects a power connector (12; 112) to an electronic device connector (16) when a sensed water vapor level from within the electronic device is below a second threshold.

12. The apparatus of any one of claims 6 to 11, comprising:
a pneumatic connector configured to connect to a port of the electronic device; and
a pump (7) configured to move gas from the pneumatic connector to the moisture detector, wherein said moisture detector is a water vapor sensor,
wherein, when the electronic device connector (16) and the pneumatic connector are connected to the electronic device and the power connector (12; 112) is connected to the source of electrical power, the pump (7) moves the gas from the electronic device to which the pneumatic connector is connected to the water vapor sensor.

13. The apparatus of claim 12, wherein the pneumatic connector and the electronic device connector (16) are configured to connect to the same port of the electronic device.

14. The apparatus of claim 12, wherein the pneumatic connector and the electronic device connector (16) are configured to connect to different ports of the electronic device.

## Patentansprüche

1. Verfahren, umfassend die folgenden Handlungen:
Probenahme von Luft aus dem Innenraum einer elektronischen Vorrichtung;
Messen einer Menge an Feuchtigkeit in der Luft aus der Vorrichtung, aus der die Probe genommen wurde; und
Aufrechterhalten einer Trennung zwischen einer Quelle für elektrische Leistung und der elektronischen Vorrichtung, wenn die Menge an Feuchtigkeit in der Luft aus der Vorrichtung, aus der die Probe genommen wurde, einen ersten vorbestimmten Schwellenwert überschreitet.

2. Verfahren nach Anspruch 1, umfassend:
Aufrechterhalten einer Verbindung zwischen der Quelle für elektrische Leistung und der elektronischen Vorrichtung, wenn die Menge an Feuchtigkeit in der Luft aus der Vorrichtung, aus der die Probe genommen wurde, einen zweiten vorbestimmten Schwellenwert nicht überschreitet.

3. Verfahren nach Anspruch 1 oder 2, umfassend:
Verbinden eines Leistungsunterbrechers (8, 101, 201) mit der Quelle für elektrische Leistung und mit der elektronischen Vorrichtung.

4. Verfahren nach Anspruch 3, umfassend:
Ermitteln, wann das Verbinden stattfindet, wobei das Aufrechterhalten der Verbindung nach dem Ermitteln stattfindet.

5. Verfahren nach einem der Ansprüche 1 bis 4, wobei:
die Probenahme Bewegen der Luft aus dem Innenraum der elektronischen Vorrichtung zu einem Feuchtigkeitsdetektor einschließt; und
das Messen Messen der Menge an Feuchtigkeit in der Luft aus der Vorrichtung, aus der die Probe genommen wurde, mit dem Feuchtigkeitsdetektor einschließt.

6. Apparat, umfassend:
einen Feuchtigkeitsdetektor,
wobei der Apparat **dadurch gekennzeichnet ist, dass** der Feuchtigkeitsdetektor eingerichtet ist, um Gas aus einer elektronischen Vorrichtung zu erhalten und ein Feuchtigkeitsniveau in einer Gasprobe zu detektieren;
und wobei der Apparat ferner umfasst:
einen Schalter (75, 75A; 97; 110), der mit dem Feuchtigkeitsdetektor verbunden ist, wobei der Schalter eingerichtet ist, um mit einer Quelle für elektrische Leistung und einer Leistungseingangsschaltung der elektrischen Vorrichtung verbunden zu werden, wobei der Schalter (75, 75A; 97; 110) einen getrennten Zustand einschließt, bei dem der Schalter (75, 75A; 97; 110) eingerichtet ist, um die Quelle für elektrische Leistung, mit welcher der Schalter (75, 75A; 97; 110) verbunden ist, von der Leistungseingangsschaltung der elektronischen Vorrichtung, mit welcher der Schalter (75, 75A; 97; 110) verbunden ist, elektrisch zu isolieren, wenn der Feuchtigkeitsdetektor detektiert, dass das Feuchtigkeitsniveau im Innenraum der elektronischen Vorrichtung, mit welcher der Schalter (75, 75A; 97; 110) verbunden ist, auf oder über einem ersten vorbestimmten Schwellenwert liegt.

7. Apparat nach Anspruch 6, wobei der Schalter (75, 75A; 97; 110) einen verbundenen Zustand einschließt, bei dem der Schalter (75, 75A; 97; 110) eingerichtet ist, um die Quelle für elektrische Leistung, mit welcher der Schalter (75, 75A; 97; 110) verbunden ist, mit der Leistungseingangsschaltung der elektronischen Vorrichtung, mit welcher der Schalter (75, 75A; 97; 110) verbunden ist, elektrisch zu verbinden, wenn der Feuchtigkeitsdetektor detektiert, dass das Feuchtigkeitsniveau im Innenraum der elektronischen Vorrichtung, mit welcher der Schalter (75, 75A; 97; 110) verbunden ist, unter einem zweiten vorbestimmten Schwellenwert liegt.

8. Apparat nach Anspruch 7, wobei der Feuchtigkeitsdetektor Wasserdampf detektiert, und wobei der erste und der zweite vorbestimmte Schwellenwert Wasserdampfschwellenwerte sind.

9. Apparat nach Anspruch 7, wobei der Feuchtigkeitsdetektor Luftfeuchtigkeit detektiert, und wobei der erste und der zweite vorbestimmte Schwellenwert Luftfeuchtigkeitsschwellenwerte sind.

10. Apparat nach einem der Ansprüche 6 bis 9, umfassend:
eine Pumpe (7), die eingerichtet ist, um das Gas aus der elektronischen Vorrichtung zu dem Feuchtigkeitsdetektor zu bewegen.

11. Apparat nach Anspruch 6, wobei der Schalter (75, 75A; 97; 110) einen Leistungsverbinder (12; 112) mit einem Verbinder einer elektronischen Vorrichtung (16) verbindet, wenn ein abgefühltes Wasserdampfniveau aus dem Innenraum der elektronischen Vorrichtung unter einem zweiten Schwellenwert liegt.

12. Apparat nach einem der Ansprüche 6 bis 11, umfassend:
einen pneumatischen Verbinder, der eingerichtet ist, um einen Anschluss der elektronischen Vorrichtung zu verbinden; und
eine Pumpe (7), die eingerichtet ist, um Gas aus dem pneumatischen Verbinder zu dem Feuchtigkeitsdetektor zu bewegen, wobei der Feuchtigkeitsdetektor ein Wasserdampfsensor ist,
wobei die Pumpe (7) das Gas aus der elektrischen Vorrichtung, mit welcher der pneumatische Verbinder verbunden ist, zu dem Wasserdampfsensor bewegt, wenn der Verbinder der elektronischen Vorrichtung (16) und der pneumatische Verbinder mit der elektronischen Vorrichtung verbunden sind, und der Leistungsverbinder (12; 112) mit der Quelle für elektrische Leistung verbunden ist.

13. Apparat nach Anspruch 12, wobei der pneumatische Verbinder und der Verbinder der elektronischen Vorrichtung (16) so eingerichtet sind, dass sie mit demselben Anschluss der elektronischen Vorrichtung zu verbinden sind.

14. Apparat nach Anspruch 12, wobei der pneumatische Verbinder und der Verbinder der elektronischen Vorrichtung (16) so eingerichtet sind, dass sie mit unterschiedlichen Anschlüssen der elektronischen Vorrichtung zu verbinden sind.

## Revendications

1. Procédé, comprenant les opérations consistant à :
échantillonner de l'air provenant de l'intérieur d'un dispositif électronique ;
mesurer une quantité d'humidité dans l'air de dispositif échantillonné ; et
maintenir une déconnexion entre une source d'énergie électrique et le dispositif électronique quand la quantité d'humidité à l'intérieur de l'air de dispositif échantillonné dépasse un premier seuil prédéterminé.

2. Procédé de la revendication 1, comprenant :
le maintien d'une connexion entre la source d'énergie électrique et le dispositif électronique quand la quantité d'humidité à l'intérieur de l'air de dispositif échantillonné ne dépasse pas un deuxième seuil prédéterminé.

3. Procédé de la revendication 1 ou 2, comprenant :
la connexion d'un interrupteur d'alimentation (8, 101, 201) à la source d'énergie électrique et au dispositif électronique.

4. Procédé de la revendication 3, comprenant :
la détermination du moment où ladite connexion se produit, ledit maintien de la connexion se produisant après ladite détermination.

5. Procédé de l'une quelconque des revendications 1 à 4, dans lequel :
ledit échantillonnage comporte le déplacement de l'air depuis l'intérieur du dispositif électronique jusqu'à un détecteur d'humidité ; et
ladite mesure comporte la mesure de la quantité d'humidité dans l'air de dispositif échantillonné avec le détecteur d'humidité.

6. Appareil, comprenant :
un détecteur d'humidité,
l'appareil étant **caractérisé en ce que** le détecteur d'humidité est configuré pour obtenir du gaz provenant d'un dispositif électronique et détecter un niveau d'humidité à l'intérieur d'un échantillon de gaz ; et l'appareil comprenant en outre :
un commutateur (75, 75A ; 97 ; 110) connecté au détecteur d'humidité, le commutateur étant configuré pour se connecter à une source d'énergie électrique et à un circuit d'entrée d'alimentation du dispositif électronique, le commutateur (75, 75A ; 97 ; 110) comportant un état déconnecté, dans lequel le commutateur (75, 75A ; 97 ; 110) est configuré pour isoler électriquement la source d'énergie électrique à laquelle le commutateur (75, 75A ; 97 ; 110) est connecté du circuit d'entrée d'alimentation du dispositif électronique auquel le commutateur (75, 75A ; 97 ; 110) est connecté quand le détecteur d'humidité détecte que le niveau d'humidité à l'intérieur du dispositif électronique auquel le commutateur (75, 75A ; 97 ; 110) est connecté est supérieur ou égal à un premier seuil prédéterminé.

7. Appareil de la revendication 6, dans lequel le commutateur (75, 75A ; 97 ; 110) comporte un état connecté, dans lequel le commutateur (75, 75A ; 97 ; 110) est configuré pour connecter électriquement la source d'énergie électrique à laquelle le commutateur (75, 75A ; 97 ; 110) est connecté ou circuit d'entrée d'alimentation du dispositif électronique auquel le commutateur (75, 75A ; 97 ; 110) est connecté quand le détecteur d'humidité détecte que le niveau d'humidité à l'intérieur du dispositif électronique auquel le commutateur (75, 75A ; 97 ; 110) est connecté est inférieur à un deuxième seuil prédéterminé.

8. Appareil de la revendication 7, dans lequel le détecteur d'humidité détecte la vapeur d'eau, et dans lequel le premier et le deuxième seuil prédéterminé sont des seuils de vapeur d'eau.

9. Appareil de la revendication 7, dans lequel le détecteur d'humidité détecte l'humidité, et dans lequel le premier et le deuxième seuil prédéterminé sont des seuils d'humidité.

10. Appareil de l'une quelconque des revendications 6 à 9, comprenant :
une pompe (7) configurée pour déplacer le gaz du dispositif électronique au détecteur d'humidité.

11. Appareil de la revendication 6, dans lequel le commutateur (75, 75A ; 97 ; 110) connecte un connecteur d'alimentation (12 ; 112) à un connecteur de dispositif électronique (16) quand un niveau détecté de vapeur d'eau provenant de l'intérieur du dispositif électronique est inférieur à un deuxième seuil.

12. Appareil de l'une quelconque des revendications 6 à 11, comprenant :
un connecteur pneumatique configuré pour se connecter à un port de dispositif électronique ; et
une pompe (7) configurée pour déplacer du gaz du connecteur pneumatique au détecteur d'humidité, ledit détecteur d'humidité étant un capteur de vapeur d'eau,
dans lequel, quand le connecteur de dispositif électronique (16) et le connecteur pneumatique sont connectés au dispositif électronique et le connecteur d'alimentation (12 ; 112) est connecté à la source d'énergie électrique, la pompe (7) déplace le gaz du dispositif électronique auquel le connecteur pneumatique est connecté au capteur de vapeur d'eau.

13. Appareil de la revendication 12, dans lequel le connecteur pneumatique et le connecteur de dispositif électronique (16) sont configurés pour se connecter au même port du dispositif électronique.

14. Appareil de la revendication 12, dans lequel le connecteur pneumatique et le connecteur de dispositif électronique (16) sont configurés pour se connecter à des ports différents du dispositif électronique.
